# EUROPÄISCHE PATENTSCHRIFT

(11) **EP 4 248 620 B1**
(45) Veröffentlichungstag und Bekanntmachung des Hinweises auf die Patenterteilung: **07.05.2025**
(21) Anmeldenummer: 21789670.3
(22) Anmeldetag: 07.10.2021
(51) Int. Cl.: H04L 12/40

(54) **TEILNEHMERSTATION FÜR EIN SERIELLES BUSSYSTEM UND VERFAHREN ZUR KOMMUNIKATION IN EINEM SERIELLEN BUSSYSTEM**
SUBSCRIBER STATION FOR A SERIAL BUS SYSTEM, AND METHOD FOR COMMUNICATION IN A SERIAL BUS SYSTEM
STATION D'ABONNÉ D'UN SYSTÈME DE BUS SÉRIE ET PROCÉDÉ DE COMMUNICATION DANS UN SYSTÈME DE BUS SÉRIE

(30) Priorität: 18.11.2020 DE 102020214535
(43) Veröffentlichungstag der Anmeldung: 27.09.2023
(73) Patentinhaber: Robert Bosch GmbH, 70442 Stuttgart (DE)
(72) Erfinder: HARTWICH, Florian, 72762 Reutlingen (DE); BAILER, Franz, 72116 Moessingen (DE); MUTTER, Arthur, 73765 Neuhausen (DE)
(86) Internationale Anmeldenummer: PCT/EP2021/077636
(87) Internationale Veröffentlichungsnummer: WO 2022/106113

(56) Entgegenhaltungen:
- EP-A1- 2 712 123
- EP-A1- 3 531 629
- DE-A1- 102018 218 721

## Beschreibung

### Technisches Gebiet

Die vorliegende Erfindung betrifft eine Teilnehmerstation für ein serielles Bussystem und ein Verfahren zur Kommunikation in einem seriellen Bussystem, das mit hoher Datenrate sowie großer Flexibilität und großer Fehlerrobustheit arbeitet.

### Stand der Technik

Bussysteme für die Kommunikation zwischen Sensoren und Steuergeräten, beispielsweise in Fahrzeugen, sollen je nach der Anzahl an Funktionen einer technischen Anlage bzw. eines Fahrzeugs, die Übertragung einer großen Datenmenge ermöglichen. Dabei wird oft gefordert, dass die Daten schneller vom Sender zum Empfänger zu übertragen sind als bisher und bei Bedarf auch große Datenpakete übertragbar sind.

Bei Fahrzeugen ist derzeit ein Bussystem in der Einführungsphase, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen. Hierfür wird die Nachricht auf den Bus in einem Rahmen gesendet, in dem zwischen zwei Kommunikationsphasen umgeschaltet wird. In der ersten Kommunikationsphase (Arbitration) wird ausgehandelt, welche der Teilnehmerstationen des Bussystems in der nachfolgenden zweiten Kommunikationsphase (Datenphase bzw. Senden der Nutzdaten) ihren Rahmen auf den Bus senden darf. CAN FD wird von den meisten Herstellern im ersten Schritt mit 500kbit/s Arbitrationsbitrate und 2Mbit/s Datenbitrate im Fahrzeug eingesetzt. Es ist also bei der Übertragung auf dem Bus zwischen einer langsamen Betriebsart und einer schnellen Betriebsart hin und her zu schalten.

Um noch größere Datenraten in der zweiten Kommunikationsphase zu ermöglichen, wird derzeit ein Nachfolgebussystem für CAN FD entwickelt, das CAN XL genannt wird und derzeit bei der Organisation CAN in Automation (CiA) standardisiert wird. CAN XL soll neben dem reinen Datentransport über den CAN-Bus auch andere Funktionen unterstützen, wie funktionale Sicherheit (Safety), Datensicherheit (Security) und Dienstgüte (QoS = Quality of Service). Dies sind elementare Eigenschaften, die in einem autonom fahrenden Fahrzeug benötigt werden.

CAN XL soll in der Datenphase hohe Bitraten unterstützen, beispielsweise bis zu 15 Mbit/s oder sogar 20 Mbit/s. Um dies zu erreichen, werden Sende-/Empfangseinrichtungen verwendet, deren Betriebsart sich umschalten lässt, um die geforderten hohen Bitraten in der Datenphase zu erreichen. Dagegen bleibt die Bitrate in der Arbitrationsphase bei ca. 500 kbit/s, um die Arbitration zu ermöglichen. Um besonders hohe Bitraten in der Datenphase verwenden zu können, kann die Sende-/Empfangseinrichtung, die derzeit für CAN XL standardisiert wird, ihre Betriebsart umschalten. Damit für die Signalisierung der Betriebsartumschaltung kein weiterer Anschluss (Pin) benötigt wird, wird ein MICI-Modul (MICI = Media Independent CAN Interface) zwischen einer Kommunikationssteuereinrichtung, insbesondere ihrem Protokoll-Controller, und einer Sende-/Empfangseinrichtung verwendet.

Bei CAN XL signalisiert die Kommunikationssteuereinrichtung, insbesondere ihr Protokoll-Controller, der Sende-/Empfangseinrichtung, dass die Sende-/Empfangseinrichtung ihre Betriebsart von langsam nach schnell oder von schnell nach langsam umzuschalten hat.

DE 10 2018 218 721 A1 beschreibt ein Nachfolgesystem von CAN FD, bei dem für die Dauer der Datenphase eventuell der Physical Layer von dem Physical Layer in der Arbitrationsphase zu einem anderen Physical Layer umgeschaltet werden muss. Hierfür ist beschrieben, wie eine Umschaltung der Betriebsart einer Sende-/Empfangseinrichtung von langsam nach schnell, also von der Arbitrationsphase in die Datenphase, erfolgen kann. Die Umschaltung von der Datenphase in die Arbitrationsphase wird als weniger kritisch als die Umschaltung zum Beginn der Datenphase beschrieben.

Für die Signalisierung bei CAN XL verwendet die Kommunikationssteuereinrichtung, insbesondere ihr Protokoll-Controller, oder das nachgeschaltete MICI-Modul, eine Codierung mittels Pulsweitenmodulation, was auch PWM-Codierung genannt wird. Die Sende-/Empfangseinrichtung führt eine PWM-Decodierung durch, um die einzelnen Bits als Differenzspannung auf dem CAN Bus treiben zu können.

Problematisch ist, dass die PWM-Codierung in der Kommunikationssteuereinrichtung und die entsprechende PWM-Decodierung in der Sende-/Empfangseinrichtung Zeit benötigen. Daher ist die Laufzeit von der sendenden Kommunikationssteuereinrichtung zu einer empfangenden Kommunikationssteuereinrichtung während der Datenphase und einem ADH-Bit am Ende der Datenphase länger als während der Arbitrations-Phase. Während eines DAS-Felds, das beim Übergang von der Datenphase zu der Arbitrationsphase in einem CAN XL-Rahmen vorgesehen ist, muss sich eine Teilnehmerstation, die derzeit nur Empfänger einer über den Bus übertragenen Nachricht ist (Empfangsknoten), auf die verkürzte Laufzeit zwischen der sendenden Teilnehmerstation (Sendeknoten) und dem Empfangsknoten synchronisieren. Das dafür vorgesehene Bit in dem DAS-Feld kann jedoch aufgrund der Laufzeitverkürzung zu früh enden. Dadurch kann der Empfangsknoten dieses Bit nicht unter allen Umständen sicher abtasten und so auch nicht richtig synchronisieren.

Als Folge davon bleibt der Phasenfehler im Empfangsknoten bestehen, der durch die verkürzte Laufzeit beim Umschalten von der Datenphase in die Arbitrationsphase entstanden ist. Dadurch ist das CAN XL Protokoll nicht funktionsfähig bzw. keine zuverlässige und robuste Kommunikation möglich.

Noch dazu ist es möglich, dass der Empfangsknoten einen Formatfehler des derzeit gesendeten Rahmens erkennt, wenn er ein AH1-Bit in dem DAS-Feld als 0 abgetastet hat. Dies führt dazu, dass der Rahmen in dem Empfangsknoten als ungültig verworfen wird. Dies ist ein systematischer Fehler und bedeutet, dass gewisse Bitraten-Einstellungen bei CAN XL nicht möglich sind und andere Bitraten-Einstellungen nicht robust funktionieren.

### Offenbarung der Erfindung

Daher ist es Aufgabe der vorliegenden Erfindung, eine Teilnehmerstation für ein serielles Bussystem und ein Verfahren zur Kommunikation in einem seriellen Bussystem bereitzustellen, welche die zuvor genannten Probleme lösen. Insbesondere sollen eine Teilnehmerstation für ein serielles Bussystem und ein Verfahren zur Kommunikation in einem seriellen Bussystem bereitgestellt werden, bei welchen auch bei hoher Datenrate, ohne Ausnahmen für gewisse Bitraten, und einer Steigerung der Menge der Nutzdaten pro Rahmen eine große Fehlerrobustheit der Kommunikation realisierbar ist.

Die Aufgabe wird durch eine Teilnehmerstation für ein serielles Bussystem mit den Merkmalen von Anspruch 1 gelöst. Die Teilnehmerstation hat eine Kommunikationssteuereinrichtung zum Steuern einer Kommunikation der Teilnehmerstation mit mindestens einer anderen Teilnehmerstation des Bussystems, und zur Auswertung eines von einem Bus des Bussystems empfangenen Signals, bei dem sich die Bitzeit in einer ersten Kommunikationsphase unterscheiden kann von einer Bitzeit in einer zweiten Kommunikationsphase, wobei die Kommunikationssteuereinrichtung ausgestaltet ist, das von dem Bus empfangene Signal, das auf einem von einer anderen Teilnehmerstation erzeugten Sendesignal basiert, gemäß einem vorbestimmten Rahmen abzutasten und auszuwerten, wobei in dem vorbestimmten Rahmen ein vorbestimmtes Feld, das einen Übergang von der zweiten Kommunikationsphase in die erste Kommunikationsphase anzeigt, zwischen dem Beginn und der darauffolgenden fallenden Flanke des vorbestimmten Felds zwei oder drei Bits mit dem logischen Wert 1 hat, wobei die Kommunikationssteuereinrichtung ausgestaltet ist, einen Rahmen, den die Kommunikationssteuereinrichtung aus dem von dem Bus empfangenen Signal abgetastet hat, unabhängig davon als vorbestimmten Rahmen und daher als gültig in Bezug auf das vorbestimmte Feld zu bewerten, ob zwischen dem Beginn des Felds und der darauffolgenden fallenden Flanke nur ein Bit oder zwei aufeinanderfolgende Bits mit dem logischen Wert 1 abgetastet wurden, und wobei die Kommunikationssteuereinrichtung ausgestaltet ist, an der fallenden Flanke des vorbestimmten Felds eine Synchronisation auszuführen, wie in Anspruch 1 beschrieben.

In der Teilnehmerstation ist eine Abtastregel für das DAS-Feld am Ende der Datenphase implementiert, aufgrund welcher sich CAN XL Empfangsknoten im DAS Feld robust synchronisieren können. Die Synchronisation ist damit nicht mehr abhängig von der Bit-Timing-Konfiguration oder der Konfiguration einer Pulsweitenmodulation (PWM) des Sendesignals. Dabei funktioniert auch die Bitraten-Umschaltung nach der zweiten Kommunikationsphase (Datenphase) bei dem Übergang von der zweiten Kommunikationsphase (Datenphase) zu der ersten Kommunikationsphase (Arbitrationsphase) sehr zuverlässig.

Mit der Teilnehmerstation wird damit eine zuverlässige und robuste Kommunikation mit CAN XL erst ermöglicht. Dies gilt auch bei extremer Einstellung der Systemparameter, wie Takttoleranz, PWM-Symbollänge, Bit-Timing-Einstellung oder sonstiger Parameter des Bussystems.

Vorteilhaft ist außerdem, dass die beschriebene Ausgestaltung der Teilnehmerstation zur Lösung der zuvor genannten Aufgabe unaufwändig und damit kostengünstig realisierbar ist.

Somit ist es mit der Teilnehmerstation in dem Bussystem möglich, in einer ersten Kommunikationsphase eine von CAN bekannte Arbitration beizubehalten und dennoch die Übertragungsrate gegenüber CAN oder CAN FD nochmals beträchtlich zu steigern.

Das von der Teilnehmerstation durchgeführte Verfahren kann auch zum Einsatz kommen, wenn in dem Bussystem auch mindestens eine CAN-Teilnehmerstation und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Teilnehmerstation sind in den abhängigen Ansprüchen angegeben.

Gemäß einer Ausgestaltung hat das vorbestimmte Feld vier Bits mit der Bitzeit der ersten Kommunikationsphase, wobei das vorbestimmte Feld eine Bitfolge mit dem logischen Wert 1101 hat, und wobei die Kommunikationssteuereinrichtung ausgestaltet ist, nach dem Abtasten eines Bits mit dem logischen Wert 1 in dem von dem Bus empfangenen Signal zwischen dem Beginn des Felds und der darauffolgenden fallenden Flanke, das nächste Bit, das in dem von dem Bus empfangenen Signal mit dem logischen Wert 0 abgetastet wird und für spätestens das dritte Bit der erwarteten Bitfolge 1101 abgetastet wird, als das dritte Bit der erwarteten Bitfolge 1101 auszuwerten.

Hierbei kann die Kommunikationssteuereinrichtung gemäß einem Ausführungsbeispiel ausgestaltet sein, einen Rahmen, den die Kommunikationssteuereinrichtung aus dem von dem Bus empfangenen Signal abgetastet hat, als fehlerhaft zu bewerten, wenn das erste Bit des vorbestimmten Felds nicht als logisch 1 abgetastet wurde. Zudem kann die Kommunikationssteuereinrichtung ausgestaltet sein, eine Hartsynchronisation zu aktivieren, wenn das erste Bit des vorbestimmten Felds als logisch 1 abgetastet wird.

Außerdem kann die Kommunikationssteuereinrichtung gemäß einem Ausführungsbeispiel ausgestaltet sein, einen Rahmen, den die Kommunikationssteuereinrichtung aus dem von dem Bus empfangenen Signal abgetastet hat, als fehlerhaft zu bewerten, wenn weder das erste Bit noch das zweite Bit des vorbestimmten Felds als logisch 1 abgetastet wurden. Hierbei kann die Kommunikationssteuereinrichtung ausgestaltet sein, einen Rahmen, den die Kommunikationssteuereinrichtung aus dem von dem Bus empfangenen Signal abgetastet hat, nicht als fehlerhaft, sondern als gültig in Bezug auf das vorbestimmte Feld zu bewerten, wenn das erste Bit des vorbestimmten Felds als logisch 0 abgetastet wurde und das zweite Bit des vorbestimmten Felds als logisch 1 abgetastet wurde, oder wenn das erste Bit des vorbestimmten Felds als logisch 1 abgetastet wurde und das zweite Bit des vorbestimmten Felds als logisch 0 abgetastet wurde. Hierbei kann die Kommunikationssteuereinrichtung ausgestaltet sein, eine Hartsynchronisation oder eine Synchronisation zu aktivieren, wenn das erste Bit des vorbestimmten Felds als logisch 1 abgetastet wird oder wenn das zweite Bit des vorbestimmten Felds als logisch 1 abgetastet wird.

Gemäß einer anderen Ausgestaltung hat das vorbestimmte Feld fünf Bits mit der Bitzeit der ersten Kommunikationsphase. Hierbei hat das vorbestimmte Feld möglicherweise eine Bitfolge mit dem logischen Wert **11101,** und wobei die Kommunikationssteuereinrichtung ausgestaltet ist, nach dem Abtasten eines Bits mit dem logischen Wert 1 für das zweite Bit der Bitfolge in dem von dem Bus empfangenen Signal, das nächste Bit, das in dem von dem Bus empfangenen Signal mit dem logischen Wert 0 abgetastet wird und für spätestens das vierte Bit der erwarteten Bitfolge abgetastet wird, als das vierte Bit der erwarteten Bitfolge auszuwerten.

Zudem kann die Kommunikationssteuereinrichtung ausgestaltet sein, in einem Rahmen, den die Kommunikationssteuereinrichtung aus dem von dem Bus empfangenen Signal abgetastet hat, den abgetasteten Wert des ersten Bit des vorbestimmten Felds zu ignorieren und für das dritte Bit des vorbestimmten Felds einen beliebigen Wert als nicht fehlerhaft zu bewerten, wobei die Kommunikationssteuereinrichtung ausgestaltet ist, einen Rahmen, den die Kommunikationssteuereinrichtung aus dem von dem Bus empfangenen Signal abgetastet hat, als fehlerhaft zu bewerten, wenn das zweite Bit des vorbestimmten Felds als logisch 0 abgetastet wurde. Noch dazu kann die Kommunikationssteuereinrichtung ausgestaltet sein, eine Hartsynchronisation zu aktivieren, wenn das zweite Bit des vorbestimmten Felds als logisch 1 abgetastet wird.

Möglicherweise hat die Teilnehmerstation zudem eine Sende-/Empfangseinrichtung zum Senden eines Sendesignals auf den Bus des Bussystems und/oder zum Empfangen eines Signals von dem Bus des Bussystems. Hierbei kann die Kommunikationssteuereinrichtung ausgestaltet sein, das Sendesignal zu erzeugen, wobei die Kommunikationssteuereinrichtung zudem ausgestaltet ist, der Sende-/Empfangseinrichtung mittels Pulsweitenmodulation in dem Sendesignal zu signalisieren, dass die Sende-/Empfangseinrichtung ihre Betriebsart in eine Betriebsart zum Senden in der ersten Kommunikationsphase oder in eine Betriebsart zum Senden in einer zweiten Kommunikationsphase umzuschalten hat.

Noch dazu kann die Teilnehmerstation ein Signalverbesserungsmodul aufweisen zum Beschleunigen eines Übergangs auf dem Bus in der ersten Kommunikationsphase von einem dominanten Buspegel zu einem rezessiven Buspegel, der von dem dominanten Buspegel überschreibbar ist, wobei die Sende-/Empfangseinrichtung ausgestaltet sein kann, das Signalverbesserungsmodul zusätzlich für eine Beschleunigung des Übergangs von einem der Buspegel der zweiten Kommunikationsphase zu dem rezessiven Pegel der ersten Kommunikationsphase zu aktivieren, wenn die Teilnehmerstation Sender des Sendesignals auf den Bus ist und die Sende-/Empfangseinrichtung von einer Betriebsart, in welcher die Kommunikationssteuereinrichtung in der zweiten Kommunikationsphase das Sendesignal auf den Bus des Bussystems sendet, in eine Betriebsart schaltet, in welcher die Kommunikationssteuereinrichtung in der ersten Kommunikationsphase das Sendesignal auf den Bus des Bussystems sendet.

Möglich ist, dass der vorbestimmte Rahmen kompatibel zu CAN FD aufgebaut ist, wobei in der ersten Kommunikationsphase ausgehandelt wird, welche der Teilnehmerstationen des Bussystems in der nachfolgenden zweiten Kommunikationsphase einen zumindest zeitweise exklusiven, kollisionsfreien Zugriff auf den Bus bekommt.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 16 gelöst. Das Verfahren wird mit einer Teilnehmerstation des Bussystems ausgeführt, die eine Kommunikationssteuereinrichtung aufweist, wobei das Verfahren die Schritte aufweist, Steuern, mit der Kommunikationssteuereinrichtung einer Kommunikation der Teilnehmerstation mit mindestens einer anderen Teilnehmerstation des Bussystems und Auswerten eines von einem Bus des Bussystems empfangenen Signals, bei dem sich die Bitzeit in einer ersten Kommunikationsphase unterscheiden kann von einer Bitzeit in einer zweiten Kommunikationsphase, wobei die Kommunikationssteuereinrichtung das von dem Bus empfangene Signal, das auf einem von einer anderen Teilnehmerstation erzeugten Sendesignal basiert, gemäß einem vorbestimmten Rahmen abtastet und auswertet, wobei in dem vorbestimmten Rahmen ein vorbestimmtes Feld, das einen Übergang von der zweiten Kommunikationsphase in die erste Kommunikationsphase anzeigt, zwischen dem Beginn und der darauffolgenden fallenden Flanke des vorbestimmten Felds zwei oder drei Bits mit dem logischen Wert 1 hat, wobei die Kommunikationssteuereinrichtung einen Rahmen, den die Kommunikationssteuereinrichtung aus dem von dem Bus empfangenen Signal abgetastet hat, unabhängig davon als vorbestimmten Rahmen und daher als gültig in Bezug auf das vorbestimmte Feld bewertet, ob in dem von dem Bus empfangenen Signal zwischen dedem Beginn des Felds und der darauffolgenden fallenden Flanke nur ein Bit oder zwei aufeinanderfolgende Bits mit dem logischen Wert 1 abgetastet wurden, und wobei die Kommunikationssteuereinrichtung an der fallenden Flanke des vorbestimmten Felds eine Synchronisation ausführt, wie in Anspruch 16 beschrieben.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus einer Nachricht, die von einer Teilnehmerstation des Bussystems gemäß dem ersten Ausführungsbeispiel gesendet werden kann;
Fig. 3 ein vereinfachtes schematisches Blockschaltbild einer Teilnehmerstation des Bussystems gemäß dem ersten Ausführungsbeispiel;
Fig. 4 einen zeitlichen Verlauf von Bussignalen CAN-XL_H und CAN-XL_L bei der Teilnehmerstation gemäß dem ersten Ausführungsbeispiel;
Fig. 5 einen zeitlichen Verlauf einer Differenzspannung VDIFF der Bussignale CAN-XL_H und CAN-XL_L bei der Teilnehmerstation gemäß dem ersten Ausführungsbeispiel;
Fig. 6 bis Fig. 8 jeweils einen zeitlichen Verlauf eines Signals, das beim Senden eines Rahmens an Anschlüssen der Teilnehmerstation gemäß dem ersten Ausführungsbeispiel auftritt, wenn die Teilnehmerstation Sender der Nachricht ist, bei deren Senden eine Umschaltung der Betriebsart der Sende-/Empfangseinrichtung von einer ersten Kommunikationsphase zu einer zweiten Kommunikationsphase durchgeführt wird;
Fig. 9 bis Fig. 11 jeweils einen zeitlichen Verlauf eines Signals, das beim Senden eines Rahmens an Anschlüssen der Teilnehmerstation gemäß dem ersten Ausführungsbeispiel auftritt, wenn die Teilnehmerstation Sender der Nachricht ist, bei deren Senden eine Umschaltung der Betriebsart der Sende-/Empfangseinrichtung von der zweiten Kommunikationsphase zu der ersten Kommunikationsphase durchgeführt wird;
Fig. 12 den zeitlichen Verlauf von Signalzuständen, die ein Empfangsknoten an seinem Empfangsanschluss als Empfangssignal sieht, wenn eine andere Teilnehmerstation Sender der Nachricht ist und dabei Signale gemäß Fig. 9 bis Fig. 11 erzeugt;
Fig. 13 den zeitlichen Verlauf von Signalzuständen, die ein Empfangsknoten an seinem Empfangsanschluss als Empfangssignal erwartet, wenn eine andere Teilnehmerstation Sender der Nachricht ist und dabei Signale gemäß Fig. 9 bis Fig. 11 erzeugt;
Fig. 14 ein schematisches Blockschaltbild einer Teilnehmerstation des Bussystems gemäß einem zweiten Ausführungsbeispiel;
Fig. 15 ein schematisches Blockschaltbild einer Teilnehmerstation des Bussystems gemäß einem dritten Ausführungsbeispiel; und
Fig. 16 ein Schaubild zur Veranschaulichung des Aufbaus einer Nachricht, die von einer Teilnehmerstation des Bussystems gemäß dem dritten Ausführungsbeispiel gesendet werden kann.

In den Figuren sind gleiche oder funktionsgleiche Elemente, sofern nichts Anderes angegeben ist, mit denselben Bezugszeichen versehen.

### Beschreibung der Ausführungsbeispiele

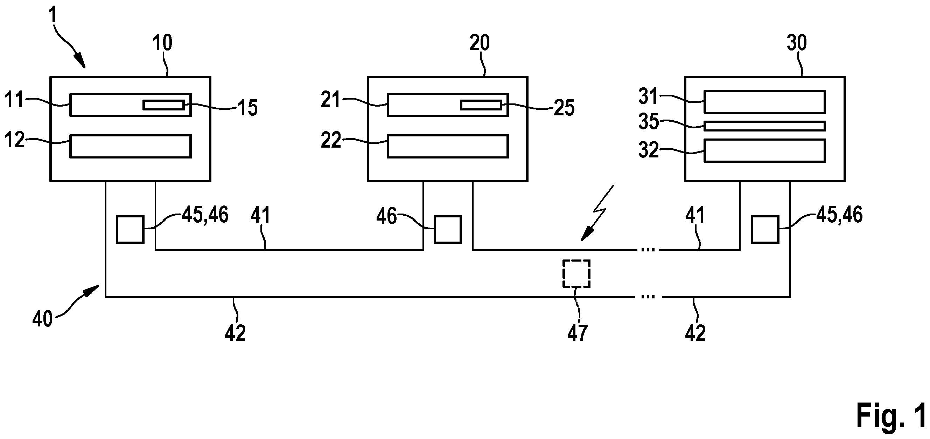

Fig. 1 zeigt als Beispiel ein Bussystem 1, das insbesondere grundlegend für ein CAN-Bussystem, ein CAN FD-Bussystem, ein CAN XL-Bussystem, und/oder Abwandlungen davon ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-XL_H und CAN-XL_L genannt werden und dienen zur elektrischen Signalübertragung nach Einkopplung der dominanten Pegel bzw. Erzeugung von rezessiven Pegeln oder anderen Pegeln für ein Signal im Sendezustand. Über den Bus 40 sind Nachrichten 45, 46 in der Form von Signalen zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, kann optional ein Fehlerrahmen 47 (Error Flag) gesendet werden. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11, eine Sende-/Empfangseinrichtung 12 und ein Phasenfehler-Kompensationsmodul 15. Die Teilnehmerstation 20 hat eine Kommunikationssteuereinrichtung 21, eine Sende-/Empfangseinrichtung 22 und optional ein Phasenfehler-Kompensationsmodul 25. Die Teilnehmerstation 30 hat eine Kommunikationssteuereinrichtung 31, eine Sende-/Empfangseinrichtung 32 und ein Phasenfehler-Kompensationsmodul 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

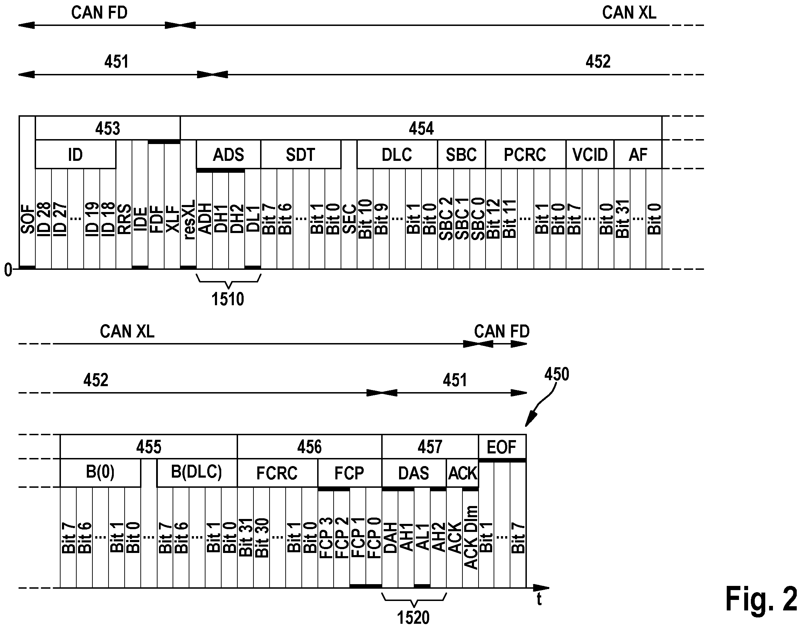

Die Kommunikationssteuereinrichtungen 11, 31 erstellen und lesen erste Nachrichten 45, die beispielsweise modifizierte CAN Nachrichten 45 sind. Hierbei sind die modifizierten CAN Nachrichten 45 auf der Grundlage eines CAN XL-Formats aufgebaut, das in Bezug auf Fig. 2 detaillierter beschrieben ist, und bei welchem das jeweilige Phasenfehler-Kompensationsmodul 15, 35 zum Einsatz kommt. Die Kommunikationssteuereinrichtungen 11, 31 können zudem ausgeführt sein, um je nach Bedarf eine CAN XL-Nachricht 45 oder eine CAN FD-Nachricht 46 für die Sende-/Empfangseinrichtung 32 bereitzustellen oder von dieser zu empfangen. Auch hierbei kommen die jeweiligen Phasenfehler-Kompensationsmodule 15, 35 zum Einsatz. Die Kommunikationssteuereinrichtungen 11, 31 erstellen und lesen also eine erste Nachricht 45 oder zweite Nachricht 46, wobei sich die erste und zweite Nachricht 45, 46 durch ihren Datenübertragungsstandard unterscheiden, nämlich in diesem Fall CAN XL oder CAN FD.

Die Kommunikationssteuereinrichtung 21 kann wie ein herkömmlicher CAN-Controller nach ISO 11898-1:2015 ausgeführt sein, d.h. wie ein CAN FD toleranter Classical CAN-Controller oder ein CAN FD Controller. Zusätzlich ist optional das Phasenfehler-Kompensationsmodul 25 vorhanden, das dieselbe Funktion hat, wie die Phasenfehler-Kompensationsmodule 15, 35. Die Kommunikationssteuereinrichtung 21 erstellt und liest zweite Nachrichten 46, beispielsweise CAN FD-Nachrichten 46. Bei den CAN FD-Nachrichten 46 kann eine Anzahl von 0 bis zu 64 Datenbytes umfasst sein, die noch dazu mit einer deutlich schnelleren Datenrate als bei einer Classical CAN-Nachrichtübertragen werden. Insbesondere ist die Kommunikationssteuereinrichtung 21 wie ein herkömmlicher CAN FD-Controller ausgeführt.

Die Sende-/Empfangseinrichtung 22 kann wie ein herkömmlicher CAN Transceiver nach ISO 11898-1:2015 oder CAN FD Transceiver ausgeführt sein. Die Sende-/Empfangseinrichtungen 12, 32 können ausgeführt sein, um je nach Bedarf Nachrichten 45 gemäß dem CAN XL-Format oder Nachrichten 46 gemäß dem derzeitigen CAN FD-Format für die zugehörige Kommunikationssteuereinrichtung 11, 31 bereitzustellen oder von dieser zu empfangen.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt für die Nachricht 45 einen CAN XL Rahmen 450, wie er von der Kommunikationssteuereinrichtung 11 für die Sende-/Empfangseinrichtung 12 zum Senden auf den Bus 40 bereitgestellt wird. Hierbei erstellt die Kommunikationssteuereinrichtung 11 den Rahmen 450 bei dem vorliegenden Ausführungsbeispiel als kompatibel mit CAN FD, wie auch in Fig. 2 veranschaulicht. Dasselbe gilt analog für die Kommunikationssteuereinrichtung 31 und die Sende-/Empfangseinrichtung 32 der Teilnehmerstation 30.

Gemäß Fig. 2 ist der CAN XL-Rahmen 450 für die CAN-Kommunikation auf dem Bus 40 in unterschiedliche Kommunikationsphasen 451, 452 unterteilt, nämlich eine Arbitrationsphase 451 und eine Datenphase 452. Der Rahmen 450 hat nach einem Startbit (SOF) ein Arbitrationsfeld 453, ein Steuerfeld 454 mit einem ADS-Feld 1510 für eine Umschaltung zwischen den Kommunikationsphasen 451, 452, ein Datenfeld 455, ein Prüfsummenfeld 456 sowie ein Rahmenabschlussfeld 457, in dem ein DAS-Feld 1520 für eine Umschaltung zwischen den Kommunikationsphasen 452, 451 vorhanden ist. Danach folgt ein Rahmenendefeld EOF.

In der Arbitrationsphase 451 wird mit Hilfe eines Identifizierers (ID) mit beispielsweise Bits ID28 bis ID18 in dem Arbitrationsfeld 453 bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt. In der Arbitrationsphase 451 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phase 451 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

In der Datenphase 452 werden neben einem Teil des Steuerfelds 454 die Nutzdaten des CAN-XL-Rahmens bzw. der Nachricht 45 aus dem Datenfeld 455 sowie das Prüfsummenfeld 456 gesendet. Danach folgt das DAS-Feld 1520, das zur Umschaltung von der Datenphase 452 zurück zur Datenphase 451 dient.

Ein Sender der Nachricht 45 beginnt ein Senden von Bits der Datenphase 452 auf den Bus 40 erst, wenn die Teilnehmerstation 10 als der Sender die Arbitration gewonnen hat und die Teilnehmerstation 10 als Sender damit zum Senden einen exklusiven Zugriff auf den Bus 40 des Bussystems 1 hat.

Ganz allgemein können in dem Bussystem mit CAN XL im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate, insbesondere auf etwa 10 Megabit pro Sekunde,
c) Anheben der Größe der Nutzdaten pro Rahmen, insbesondere auf etwa 2kbyte oder einen beliebigen anderen Wert.

Wie in Fig. 2 dargestellt, verwendet die Teilnehmerstation 10 in der Arbitrationsphase 451 als erster Kommunikationsphase teilweise, insbesondere bis zum FDF-Bit (inklusive), ein von CAN/CAN-FD bekanntes Format gemäß der ISO11898-1:2015. Dagegen verwendet die Teilnehmerstation 10 ab dem FDF-Bit in der ersten Kommunikationsphase sowie in der zweiten Kommunikationsphase, der Datenphase 452, ein CAN XL Format, das nachfolgend beschrieben ist.

Bei dem vorliegenden Ausführungsbeispiel sind CAN XL und CAN FD kompatibel. Hierbei wird das von CAN FD bekannte res-Bit, das nachfolgend XLF-Bit genannt ist, für die Umschaltung von dem CAN FD Format zu dem CAN XL Format genutzt. Daher sind die Rahmenformate von CAN FD und CAN XL bis zum res-Bit bzw. XLF-Bit gleich. Ein Empfänger erkennt erst bei dem res-Bit, in welchem Format der Rahmen 450 gesendet wird. Eine CAN XL Teilnehmerstation, also hier die Teilnehmerstationen 10, 30, unterstützt auch CAN FD.

Alternativ zu dem in Fig. 2 gezeigten Rahmen 450, bei welchem ein Identifizierer (Identifier) ID28 bis ID18 mit 11 Bit verwendet wird, ist optional ein CAN XL Erweitertes Rahmenformat möglich, bei dem ein Identifizierer (Identifier) mit 29 Bit verwendet wird. Dieses erweiterte Rahmenformat ist bis zum FDF-Bit identisch zu dem bekannten CAN FD Erweiterten Rahmenformat aus der ISO11898-1:2015.

Gemäß Fig. 2 ist der Rahmen 450 vom SOF-Bit bis einschließlich zum FDF-Bit identisch zum CAN FD Base Frame Format gemäß der ISO11898-1:2015. Daher ist der bekannte Aufbau hier nicht weiter erläutert. Bits, die an ihrer unteren Linie in Fig. 2 mit einem dicken Strich dargestellt sind, werden in dem Rahmen 450 als dominant oder ,0' gesendet. Bits, die an ihrer oberen Linie in Fig. 2 mit einem dicken Strich dargestellt sind, werden in dem Rahmen 450 als rezessiv oder ,1' gesendet. In der CAN XL Datenphase 452 werden symmetrische ,1' und ,0' Pegel verwendet, statt rezessiver und dominanter Pegel.

Allgemein werden bei der Erzeugung des Rahmens 450 zwei unterschiedliche Stuffing-Regeln angewendet. Bis vor dem FDF Bit im Arbitrationsfeld 453 gilt die dynamische Bit-Stuffing-Regel von CAN FD, so dass nach 5 gleichen Bits in Folge ein inverses Stuff-Bit einzufügen ist. In der Datenphase 452 bis vor das FCP Feld gilt eine feste Stuffing-Regel, so dass nach einer festen Zahl von Bits ein fixed Stuff-Bit einzufügen ist. Alternativ können statt nur einem Stuff-Bit eine Anzahl von 2 oder mehr Bits als fixed Stuff-Bits eingefügt werden.

In dem Rahmen 450 folgt direkt nach dem FDF-Bit das XLF-Bit, das von der Position her dem "res Bit" im CAN FD Base Frame Format entspricht, wie zuvor erwähnt. Wird das XLF-Bit als 1, also rezessiv, gesendet, identifiziert es damit den Rahmen 450 als CAN XL-Rahmen. Für einen CAN FD Rahmen setzt die Kommunikationssteuereinrichtung 11 das XLF-Bit als 0, also dominant.

Nach dem XLF-Bit folgt in dem Rahmen 450 ein resXL-Bit, das ein dominantes Bit für die zukünftige Nutzung ist. Das resXL muss für den Rahmen 450 als 0, also dominant, gesendet werden. Empfängt die Teilnehmerstation 10 jedoch ein resXL-Bit als 1, also rezessiv, geht die empfangende Teilnehmerstation 10 beispielsweise in einen Protokollausnahmezustand (Protocoll Exception State), so wie es bei einer CAN FD Nachricht 46 für ein res=1 ausgeführt wird. Alternativ könnte das resXL-Bit genau umgekehrt definiert sein, also, dass es als 1, also rezessiv, gesendet werden muss. In diesem Fall geht die empfangende Teilnehmerstation bei einem dominanten resXL-Bit in den Protokollausnahmezustand.

Nach dem resXL-Bit folgt in dem Rahmen 450 eine Sequenz ADS (Arbitration Data Switch), in welcher eine vorbestimmte Bitsequenz codiert wird. Diese Bitsequenz erlaubt eine einfache und sichere Umschaltung von der Bitrate der Arbitrationsphase 451 (Arbitrationsbitrate) zu der Bitrate der Datenphase 452 (Datenbitrate). Das erste Bit des ADS-Felds 1510 ist das ADH Bit. Optional wird innerhalb des ADH-Bits die Betriebsart der Sende-/Empfangseinrichtung 12, 32 umgeschaltet. Trotz einer optionalen Betriebsartumschaltung der Sende-/Empfangseinrichtung und der damit verbundenen Pegelschwankungen während des ADH-Bits, wird das ADH-Bit zumindest in seinem letzten Teil, beispielsweise den letzten 50% des Bits, als logische 1 auf dem Bus gesendet. Das ADH-Bit ist das letzte Bit der Arbitrationsphase 451. Die drei folgenden Bits DH1, DH2 und DL1 werden bereits mit der Datenbitrate gesendet. Somit sind die Bits DH1, DH2 und DL1 bei CAN XL zeitlich kurze Bits der Datenphase 452. Die Bits DH1 und DH2 haben jeweils den logischen Wert 1. Das letzte Bit ist das Bit DL1, das den logischen Wert 0 hat. Die Empfangsknoten synchronisieren sich nach der Bitratenumschaltung auf die fallende Flanke am Anfang des Bits DL1. Das ADS-Feld 1510 wird zum Übergang von der ersten Kommunikationsphase 451 in die zweite Kommunikationsphase 452 verwendet.

Nach der Sequenz ADS folgt in dem Rahmen 450 ein SDT-Feld, das den Inhalt des Datenfeldes 455 kennzeichnet. Der Inhalt des SDT-Felds gibt an, welche Art von Information in dem Datenfeld 455 enthalten ist. Beispielsweise gibt das SDT-Feld an, ob sich im Datenfeld 455 ein "Internet Protocol" (IP) Rahmen befinden, oder ein getunnelter Ethernet Rahmen oder sonstiges.

Auf das SDT-Feld folgt ein SEC-Feld, das angibt, ob der Rahmen 450 mit dem CAN Sicherheitsprotokoll abgesichert ist oder nicht. Das SEC-Feld ist 1 Bit breit und hat wie das SDT Feld die Funktion anzugeben, welche Art von Information im Datenfeld 455 enthalten ist.

An das SEC-Feld schließt sich ein DLC-Feld an. In dem DLC-Feld wird der Datenlängencode (DLC = Data Length Code) eingefügt, welcher die Anzahl der Datenbytes im Datenfeld 455 des Rahmens 450 angibt. Die Anzahl der Datenbytes im Datenfeld 455 kann jeden Wert von 1 bis zur maximalen Zahl von Bytes des Datenfelds 455 bzw. Datenfeldlänge annehmen. Beträgt die maximale Datenfeld-Länge insbesondere 2048 Bit, benötigt der Datenlängencode (DLC) eine Anzahl von 11 Bits unter den Annahmen, dass DLC = 0 eine Datenfeld-Länge mit einer Anzahl von 1 Byte bedeutet und DLC = 2047 eine Datenfeld-Länge mit einer Anzahl von 2048 Byte Datenfeld-Länge bedeutet. Alternativ könnte ein Datenfeld 455 der Länge 0 erlaubt sein, wie beispielsweise bei CAN. Hierbei würde DLC = 0 beispielsweise die Datenfeld-Länge mit der Anzahl von 0 Bytes codieren. Die maximale codierbare Datenfeld-Länge ist mit beispielsweise 11 Bit dann (2¹¹)-1 = 2047.

Nach dem DLC-Feld folgt in dem Rahmen 450 ein SBC-Bit-Zähler-Feld (Stuff-Bit-Count). In diesem Feld ist die Anzahl der dynamischen Stuff-Bits angegeben, die im Arbitrationsfeld 453 gesendet wurden. Ein Empfangsknoten verwendet die Information des SBC-Bit-Zähler-Felds, um zu prüfen, ob der Empfangsknoten die richtige Anzahl an dynamischen Stuff-Bits empfangen hat.

Im Anschluss an das SBC-Bit-Zähler-Feld folgt eine Präambelprüfsumme PCRC, die auch Preface-CRC genannt wird. Die Präambelprüfsumme PCRC ist eine Prüfsumme zur Absicherung des Rahmenformates des Rahmens 450, das heißt aller veränderlichen Bits vom Beginn des Rahmens 450 mit dem SOF-Bit bis zum Beginn der Präambelprüfsumme PCRC, inklusive aller dynamischen und optional der fixed Stuff-Bits bis zum Beginn der Präambelprüfsumme PCRC. Die Länge der Präambelprüfsumme PCRC und damit des Prüfsummen-Polynoms gemäß der zyklischen Redundanzprüfung (CRC) ist entsprechend der gewünschten Hamming-Distanz zu wählen.

Nach der Präambelprüfsumme PCRC folgt in dem Rahmen 450 ein Feld VCID (Virtual CAN Bus ID). Das VCID-Feld hat eine Länge von 1 Byte. In dem VCID-Feld ist die Nummer eines virtuellen CAN Busses enthalten.

Nach dem Feld VCID folgt in dem Rahmen 450 ein Feld AF (Acceptance Field). Das AF-Feld hat eine Länge von 32 Bit. In dem AF-Feld ist eine Adresse oder ein anderer Wert für eine Akzeptanzfilterung enthalten.

Nach dem Feld AF folgt in dem Rahmen 450 das Datenfeld 455 (Data Field). Das Datenfeld 455 besteht aus P Bytes B, wobei P in dem DLC-Feld codiert ist, wie zuvor beschrieben. P ist eine natürliche Zahl größer oder gleich 1.

Nach dem Datenfeld 455 folgt in dem Rahmen 450 das Prüfsummenfeld 456 mit einer Rahmenprüfsumme FCRC und einem FCP-Feld. Die Rahmenprüfsumme FCRC besteht aus den Bits der Rahmenprüfsumme FCRC, die beispielsweise 32 Bits hat. Die Länge der Rahmenprüfsumme FCRC und damit des CRC Polynoms ist entsprechend der gewünschten Hamming-Distanz zu wählen. Die Rahmenprüfsumme FCRC sichert den gesamten Rahmen 450 ab. Alternativ ist optional nur das Datenfeld 455 mit der Rahmenprüfsumme FCRC abgesichert.

Nach der Rahmenprüfsumme FCRC folgt in dem Rahmen 450 das FCP-Feld, wobei FCP = Frame Check Pattern = Rahmenprüfmuster gilt. Das FCP Feld besteht aus 4 Bits mit insbesondere der Bitfolge 1100. Ein Empfangsknoten prüft mittels des FCP Felds, ob der Empfangsknoten bitsynchron zum Sende-Datenstrom ist. Zudem synchronisiert sich ein Empfangsknoten auf die fallende Flanke im FCP-Feld.

Nach dem FCP-Feld schließt sich das Rahmenabschlussfeld 457 an. Das Rahmenabschlussfeld 457 besteht aus zwei Feldern, nämlich dem DAS-Feld 1520, und dem Bestätigungsfeld oder ACK-Feld mit dem mindestens einen Bit ACK und dem Bit ACK-Dlm.

Das DAS-Feld 1520 enthält die Sequenz DAS (Data Arbitration Switch), in welcher eine vorbestimmte Bitsequenz codiert wird. Die Bitsequenz DAH, AH1, AL1 erlaubt eine einfache und sichere Umschaltung von der Datenbitrate der Datenphase 452 zu der Arbitrationsbitrate der Arbitrationsphase 451. Zudem wird während des DAS-Felds 1520 die Betriebsart der Sende-/Empfangseinrichtung 12, 32, optional von einer Betriebsart FAST in die Betriebsart SLOW, umgeschaltet. Das DAS-Feld 1520 hat in Fig. 2 die Bits DAH, AH1, AL1, AH2. Das Bit AH2 dient zum Abstandhalten zu dem Bestätigungsfeld (ACK). Das DAS-Feld hat mindestens drei Bits. Bei dem Beispiel von Fig. 2 hat die Bitsequenz der Sequenz DAS ein Arbitrationsbit DAH und ein Arbitrationsbit AH1, die jeweils den logischen Wert 1 haben. Innerhalb des DAH -Bits wird der Physical Layer, also die Betriebsart der Sende-/Empfangseinrichtung 12, 32, umgeschaltet von FAST_TX oder FAST_RX nach SLOW. Auf das Bit AH1 folgt das Bit AL1 (logisch 0) und das Bit AH2 (logisch 1). Mit den zwei Bits DAH und AH1 wird sichergestellt, dass genug Zeit für die Betriebsartumschaltung der Sende-/Empfangseinrichtung 11 vorhanden ist, und das alle Teilnehmerstationen 10, 30 einen rezessiven Pegel von deutlich mehr als einer Arbitrationsbitzeit vor der Flanke am Anfangs des AL2 Bits (logisch 0) sehen. Damit wird eine sichere Synchronisation der Teilnehmerstationen des Bussystems gewährleistet, die sich derzeit auf die Kommunikation auf dem Bus re-integrieren.

In dem Rahmenabschlussfeld 457 folgt nach der Sequenz des DAS-Felds 1520 das Bestätigungsfeld (ACK). In dem Bestätigungsfeld sind Bits zur Bestätigung oder Nichtbestätigung eines korrekten Empfangs des Rahmens 450 vorgesehen. Bei dem Beispiel von Fig. 2 sind ein ACK-Bit, das alternativ als ACK-Slot bezeichnet werden kann und optional mehr als ein Bit aufweist, und ein ACK-dlm-Bit vorgesehen. Optional können zusätzlich ein NACK-Bit und ein NACK-dlm-Bit vorhanden sein. Das ACK-Bit senden die empfangenden Teilnehmerstation 10, 30 als dominant, wenn sie den Rahmen 450 korrekt empfangen haben. Die sendende Teilnehmerstation sendet das ACK-Bit als rezessiv. Das ACK-Bit oder der ACK-Slot ist somit ein Platzhalter für Rückmeldung(en) von den Empfangsknoten. Daher kann das ursprünglich in dem Rahmen 450 auf den Bus 40 gesendete Bit von den empfangenden Teilnehmerstationen 10, 30 überschrieben werden. Das ACK-dlm-Bit wird als ein rezessives Bit gesendet, welches zur Abtrennung zu anderen Feldern dient. Das NACK-Bit und das NACK-dlm Bit dienen dazu, dass eine empfangende Teilnehmerstation einen nicht korrekten Empfang des Rahmens 450 auf dem Bus 40 signalisieren kann. Die Funktion der Bits ist wie die des ACK- Bits und des ACK-dlm-Bits.

Nach dem Rahmenabschlussfeld 457 folgt in dem Rahmen 450 ein Endefeld (EOF = End of Frame). Die Bitsequenz des Endefelds (EOF) dient dazu, das Ende des Rahmens 450 zu kennzeichnen. Das Endefeld (EOF) sorgt dafür, dass am Ende des Rahmens 450 eine Anzahl von 8 rezessiven Bits gesendet wird. Das ist eine Bitfolge, die innerhalb des Rahmens 450 nicht auftreten kann.

Dadurch kann von den Teilnehmerstationen 10, 20, 30 das Ende des Rahmens 450 sicher erkannt werden.

Das Endefeld (EOF) hat eine Länge, die abhängig davon unterschiedlich ist, ob im ACK-Bit ein dominantes Bit oder ein rezessives Bit gesehen wurde. Wenn die sendende Teilnehmerstation das ACK-Bit als dominant empfangen hat, dann hat das Endefeld (EOF) eine Anzahl von 7 rezessiven Bits. Ansonsten ist das Endefeld (EOF) nur 5 rezessive Bits lang.

Nach dem Endefeld (EOF) folgt in dem Rahmen 450 ein Zwischenrahmenabstand (IFS - Inter Frame Space), der in Fig. 2 nicht dargestellt ist. Dieser Zwischenrahmenabstand (IFS) ist ausgestaltet wie bei CAN FD entsprechend der ISO11898-1:2015.

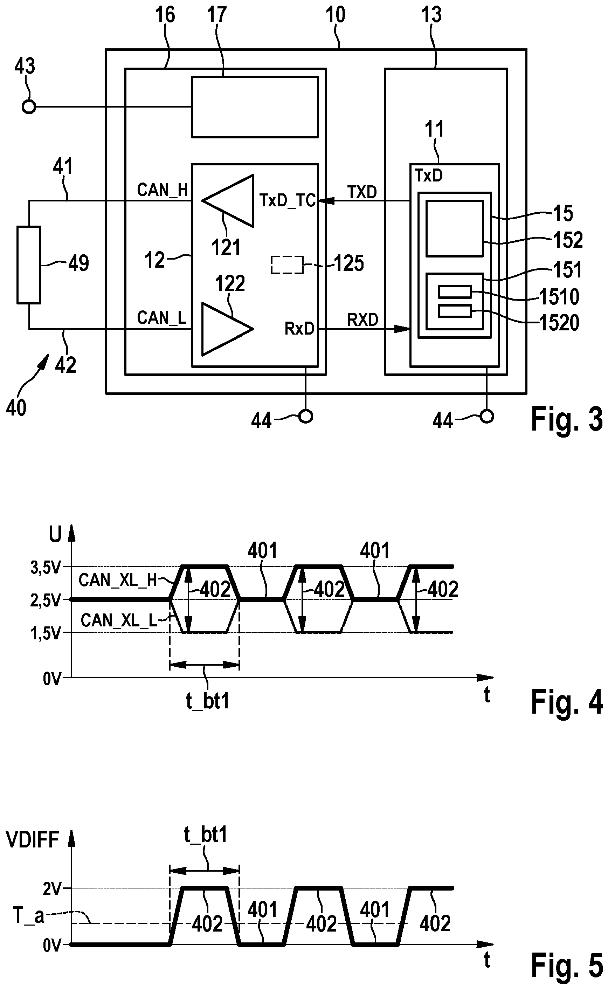

Fig. 3 zeigt den grundlegenden Aufbau der Teilnehmerstation 10 mit der Kommunikationssteuereinrichtung 11, der Sende-/Empfangseinrichtung 12 und dem Phasenfehler-Kompensationsmodul 15, das Teil der Kommunikationssteuereinrichtung 11 ist. Die Teilnehmerstation 30 ist in ähnlicher Weise aufgebaut, wie in Fig. 3 gezeigt, jedoch ist das Phasenfehler-Kompensationsmodul 35 gemäß Fig. 1 separat von der Kommunikationssteuereinrichtung 31 und der Sende-/Empfangseinrichtung 32 angeordnet. Daher wird die Teilnehmerstation 30 nicht separat beschrieben.

Gemäß Fig. 3 hat die Teilnehmerstation 10 zusätzlich zu der Kommunikationssteuereinrichtung 11 und der Sende-/Empfangseinrichtung 12 einen Mikrocontroller 13, welchem die Kommunikationssteuereinrichtung 11 zugeordnet ist, und eine System-ASIC 16 (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC 16 ist zusätzlich zu der Sende-/Empfangseinrichtung 12 eine Energieversorgungseinrichtung 17 eingebaut, welche die Sende-/Empfangseinrichtung 12 mit elektrischer Energie versorgt. Die Energieversorgungseinrichtung 17 liefert üblicherweise eine Spannung CAN_Supply von 5 V. Je nach Bedarf kann die Energieversorgungseinrichtung 17 jedoch eine andere Spannung mit einem anderen Wert liefern. Zusätzlich oder alternativ kann die Energieversorgungseinrichtung 17 als Stromquelle ausgestaltet sein.

Das Phasenfehler-Kompensationsmodul 15 hat einen Einfügeblock 151, der das vorbestimmte DAS-Feld 1520 und optional auch das ADS-Feld 1510 von Fig. 2 in den Rahmen 450 einfügt, und einen Signalisierblock 152. Die Blöcke 151, 152 sind nachfolgend noch genauer beschrieben.

Die Sende-/Empfangseinrichtung 12 hat zudem ein Sendemodul 121 und ein Empfangsmodul 122 sowie optional ein Signalverbesserungsmodul 125. Auch wenn nachfolgend immer von der Sende-/Empfangseinrichtung 12 gesprochen ist, ist es alternativ möglich, das Empfangsmodul 122 in einer separaten Einrichtung extern von dem Sendemodul 121 vorzusehen. Das Sendemodul 121 und das Empfangsmodul 122 können wie bei einer herkömmlichen Sende-/Empfangseinrichtung 22 aufgebaut sein. Das Sendemodul 121 kann insbesondere mindestens einen Operationsverstärker und/oder einen Transistor aufweisen. Das Empfangsmodul 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H oder CAN-XL_H und dessen zweite Busader 42 für CAN_L oder CAN-XL_L. Über mindestens einen Anschluss 43 erfolgt die Spannungsversorgung für die Energieversorgungseinrichtung 17 zum Versorgen der ersten und zweiten Busader 41, 42 mit elektrischer Energie, insbesondere mit der Spannung CAN-Supply. Die Verbindung mit Masse bzw. CAN_GND ist über einen Anschluss 44 realisiert. Die erste und zweite Busader 41, 42 sind mit einem Abschlusswiderstand 49 terminiert.

Die erste und zweite Busader 41, 42 sind in der Sende-/Empfangseinrichtung 12 nicht nur mit dem Sendemodul 121, das auch als Transmitter bezeichnet wird, sondern auch mit dem Empfangsmodul 122 verbunden, das auch als Receiver bezeichnet wird, auch wenn die Verbindung in Fig. 3 zur Vereinfachung nicht gezeigt ist.

Im Betrieb des Bussystems 1 setzt das Sendemodul 121 ein Sendesignal TXD oder TxD der Kommunikationssteuereinrichtung 11 in entsprechende Signale CAN-XL_H und CAN-XL_L für die Busadern 41, 42 um und sendet diese Signale CAN-XL_H und CAN-XL_L an den Anschlüssen für CAN_H und CAN_L auf den Bus 40.

Das Empfangsmodul 122 bildet aus von dem Bus 40 empfangenen Signalen CAN-XL_H und CAN-XL_L gemäß Fig. 4 ein Empfangssignal RXD oder RxD und gibt dieses an die Kommunikationssteuereinrichtung 11 weiter, wie in Fig. 3 gezeigt. Mit Ausnahme eines Leerlauf- oder Bereitschaftszustands (Idle oder Standby), hört die Sende-/Empfangseinrichtung 12 mit dem Empfangsmodul 122 im Normalbetrieb immer auf eine Übertragung von Daten bzw. Nachrichten 45, 46 auf dem Bus 40 und zwar unabhängig davon, ob die Sende-/Empfangseinrichtung 12 Sender der Nachricht 45 ist oder nicht.

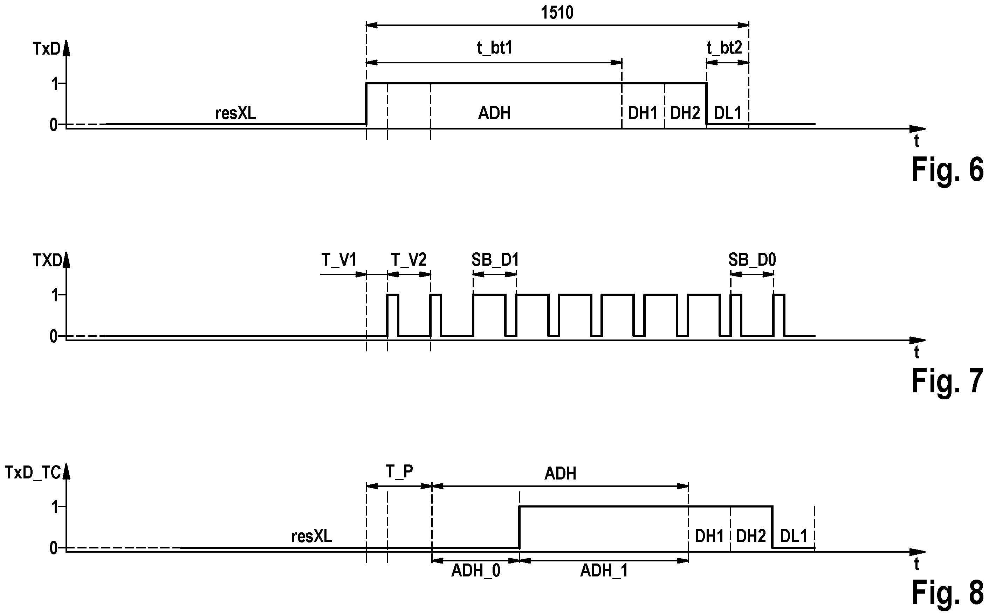

Gemäß dem Beispiel von Fig. 4 haben die Signale CAN-XL_H und CAN-XL_L zumindest in der Arbitrationsphase 451 die dominanten und rezessiven Buspegel 401, 402, wie von CAN bekannt. Auf dem Bus 40 bildet sich ein Differenzsignal VDIFF = CAN-XL_H - CAN-XL_L aus, das in Fig. 5 für die Arbitrationsphase 451 gezeigt ist. Die einzelnen Bits des Signals VDIFF mit der Bitzeit t_bt1 können in der Arbitrationsphase 451 mit einer Empfangsschwelle T_a von beispielsweise 0,7 V erkannt werden. In der Datenphase 452 werden die Bits der Signale CAN-XL_H und CAN-XL_L schneller, also mit einer kürzeren Bitzeit t_bt2, gesendet als in der Arbitrationsphase 451. Dies ist anhand von Fig. 6 bis Fig. 9 genauer beschrieben. Somit unterscheiden sich die Signale CAN-XL_H und CAN-XL_L in der Datenphase 452 zumindest in deren schnelleren Bitrate von den herkömmlichen Signalen CAN_H und CAN_L.

Die Abfolge der Zustände 401, 402 für die Signale CAN-XL_H, CAN-XL_L in Fig. 4 und der daraus resultierende Verlauf der Spannung VDIFF von Fig. 5 dient nur der Veranschaulichung der Funktion der Teilnehmerstation 10. Die Abfolge der Datenzustände für die Buszustände 401, 402 ist je nach Bedarf wählbar.

Das optional vorhandene Signalverbesserungsmodul 125 ist ausgestaltet, eine SIC-Funktion (SIC = Signal Improvement Capability) auszuführen. Die SIC-Funktion bewirkt, dass in der Arbitrationsphase 451 der Übergang der Differenzspannung VDIFF auf den Busadern von Dominant (401 von Fig. 5) nach Rezessiv (402 von Fig. 5) beschleunigt wird. Das Signalverbesserungsmodul 125 löst die SIC-Funktion bei einem Übergang von 0 nach 1 am TXD-Eingang der Sende-/Empfangseinrichtung 12 aus. Die SIC-Funktion (SIC = Signal Improvement Capability) ist nur während der ersten Betriebsart B_451 (SLOW) mit dominanten und rezessiven Signalzuständen aktiv.

Mit anderen Worten erzeugt das Sendemodul 121, wenn es in eine erste Betriebsart B_451 (SLOW) geschaltet ist, gemäß Fig. 4 einen ersten Datenzustand als Buszustand 402 mit unterschiedlichen Buspegeln für zwei Busadern 41, 42 der Busleitung und einen zweiten Datenzustand als Buszustand 401 mit demselben Buspegel für die zwei Busadern 41, 42 der Busleitung des Busses 40.

Außerdem sendet das Sendemodul 121, für die zeitlichen Verläufe der Signale CAN-XL_H, CAN-XL_L in einer zweiten Betriebsart B_452_TX (FAST_TX), welche die Datenphase 452 umfasst, die Bits mit einer höheren Bitrate auf den Bus 40. Die CAN-XL_H und CAN-XL_L Signale können in der Datenphase 452 zudem mit einem anderen Physical Layer als bei CAN FD erzeugt werden. Dadurch kann die Bitrate in der Datenphase 452 noch weiter erhöht werden als bei CAN FD. Eine Teilnehmerstation, die in der Datenphase 452 kein Sender des Rahmens 450 ist, stellt in ihrer Sende-/Empfangseinrichtung eine dritte Betriebsart B_452_RX (FAST_RX) ein.

Zur Signalisierung der Umschaltung von der Betriebsart B_451 in die Betriebsart B_452_TX (FAST_TX) oder die Betriebsart B_452_RX (FAST_RX) führt die Kommunikationssteuereinrichtung 11 eine Pulsweitenmodulation (PWM) des Sendesignals TxD durch. Dazu verwendet die Kommunikationssteuereinrichtung 11 ein oder mehr PWM-Symbole pro logischem Bit des CAN XL Rahmens 450. Grundsätzlich gilt, dass ein PWM-Symbol aus zwei Phasen besteht, nämlich einer 0-Phase und einer 1-Phase. Außerdem wird ein PWM-Symbol von zwei gleichen Flanken begrenzt, beispielsweise von zwei steigenden Flanken.

Das Phasenfehler-Kompensationsmodul 15 von Fig. 3, insbesondere dessen Einfügeblock 151, dient zum Einfügen des DAS-Felds 1520 und optional auch des ADS-Felds 1510 von Fig. 2 in den Rahmen 450, wenn die Teilnehmerstation 10 als Sender des Rahmens 450 agiert. Zudem kann das Phasenfehler-Kompensationsmodul 15, insbesondere sein Signalisierblock 152, die Pulsweitenmodulation (PWM) durchführen, wie nachfolgend für die Umschaltung zwischen den Betriebsarten B_451 (SLOW) und B_452_TX (FAST_TX) beschrieben.

Fig. 6 zeigt über der Zeit t das resultierende digitale Sendesignal TxD in dem Bereich der Umschaltung von der Arbitrationsphase 451 in die Datenphase 452 eines Rahmens 450, mit anderen Worten beim Übergang von der Phase 451 zu der Phase 452. In den Rahmen 450 ist nach dem Bit resXL das ADS-Feld 1510 eingefügt. Das Sendesignal TxD wird von der Kommunikationssteuereinrichtung 11 als Sender des Rahmens 450 seriell an die Sende-/Empfangseinrichtung 12 gesendet, wie nachfolgend genauer beschrieben. Bis zu dem Bit ADH einschließlich haben die Bits des Rahmens 450 eine Bitdauer t_bt1. Ab dem Bit DH1, dem ersten Bit der Datenphase 452, haben die Bits des Rahmens 450 eine Bitdauer t_bt2. Die Bitdauer t_b2 ist bei dem Beispiel von Fig. 6 kürzer als die Bitdauer t_bt1.

Wie bereits in Fig. 2 und auch in Fig. 6 gezeigt, wird das ADH-Bit bei dem vorliegenden Ausführungsbeispiel mit dem logischen Wert 1 gesendet.

Fig. 7 zeigt die über der Zeit t aus dem Sendesignal TxD resultierenden Zustände, die seriell an dem Anschluss TXD zwischen der Kommunikationssteuereinrichtung 11 und der Sende-/Empfangseinrichtung 12 auftreten. Hierfür führt die Kommunikationssteuereinrichtung 11, beispielsweise das Phasenfehler-Kompensationsmodul 15, insbesondere der Signalisierblock 152, im ADH-Bit sowie in der Datenphase 452 die Pulsweitenmodulation (PWM) des Sendesignals TxD von Fig. 6 durch. Genauer gesagt, beginnt die Pulsweitenmodulation (PWM) des Sendesignals TxD von Fig. 6 mit dem ADH-Bit. In der Arbitrationsphase 451 vor dem ADH-Bit erfolgt keine Pulsweitenmodulation (PWM) des Sendesignals TxD.

Die Sende-/Empfangseinrichtung 12 erkennt aufgrund der hohen Frequenz der Flanken des Signals am TXD Anschluss, dass die Sende-/Empfangseinrichtung 12 von der Betriebsart B_451 der Arbitrationsphase in eine der schnellen Betriebsarten B_452_TX (FAST_TX), B_452_RX (FAST_RX) wechseln soll bzw. auch dort bleiben soll. Die Sende-/Empfangseinrichtung 12, erkennt am Wert des zuvor gesendeten resXL Bits, ob sie in die Betriebsart B_452_TX (FAST_TX) oder die Betriebsart B_452_RX (FAST_RX) wechseln soll. Zusätzlich oder alternativ erkennt die Sende-/Empfangseinrichtung 12 am Wert des ersten PWM-Symbols oder der S ersten PWM-Symbole, in welche Betriebsart sie wechseln soll. S ist eine natürliche Zahl die größer oder gleich 1 ist. Das Signal an dem Anschluss TXD ist aufgrund der durchgeführten PWM-Codierung um eine Zeitdauer T_V1 verzögert gegenüber dem TxD-Signal. Der Signalisierblock 152 generiert die ersten S PWM-Symbole entsprechend der Betriebsart, in die die Sende-/Empfangseinrichtung geschaltet werden soll. Die ersten S PWM-Symbole sind also nicht abhängig von dem Wert des ADH-Bits codiert. Zusätzlich oder alternativ können die ersten S PWM Symbole in dem Sendeknoten dazu verwendet werden, einen schrittweisen Übergang der Differenzspannung VDIFF auf dem Bus 40 von Dominant +2V über die Differenzspannung VDIFF von +1V für die logische 0 in der Datenphase 452 hin zur Differenzspannung VDIFF von -1V für die logische 1 in der Datenphase 452 zu erreichen.

Bei dem Beispiel in Fig. 7 ist bei einem PWM-Symbol SB_D0 die 0-Phase länger als die 1-Phase, was einem Bit in der Datenphase 452 mit logischem Wert 0 in dem Sendesignal TxD entspricht. Dagegen ist bei einem PWM-Symbol SB_D1 die 1-Phase länger als die 0-Phase, was einem Bit mit logischem Wert 1 entspricht. Selbstverständlich können die PWM-Symbole SB_D0, SB_D1 anders definiert sein, insbesondere genau anders herum als zuvor beschrieben.

Zudem haben die ersten zwei PWM-Symbole in dem Signal an dem Anschluss TXD bei dem Beispiel von Fig. 7 den logischen Wert 0 (SB_D0). Die Sende-/Empfangseinrichtung 12, 32 wertet die ersten zwei PWM-Symbole aus, um zu entscheiden, in welche Betriebsart die Sende-/Empfangseinrichtung 12, 32 umzuschalten ist. Bei dem vorliegenden Beispiel von Fig. 7 soll die Sende-/Empfangseinrichtung 12, 32 des Sendeknotens aufgrund der zwei PWM-Symbole mit dem logischen Wert 0 in die Betriebsart B_452_TX (FAST_TX) schalten. Die Umschaltung in die Betriebsart B_452_RX (FAST_RX) wird mit mindestens einem anderem Wert der beiden ersten PWM Symbole in dem ADH-Bit signalisiert.

Wie in Fig. 7 gezeigt, führt die Kommunikationssteuereinrichtung 11, beispielsweise das Phasenfehler-Kompensationsmodul 15, insbesondere der Signalisierblock 152, die anschließende Pulsweitenmodulation (PWM) des ADH-Bits des Sendesignals TxD von Fig. 6 derart durch, dass alle folgenden PWM-Symbole des ADH-Bits mit dem logischen Wert 1 gesendet werden. Somit sind in dem zweiten Teil des ADH-Bits, dem Teil nach der Signalisierung der Art der Betriebsart B_452 der Sende-/Empfangseinrichtung 12, 32 für die Datenphase 452, nur Symbole SB_D1 vorhanden.

Fig. 8 zeigt den zeitlichen Verlauf eines Signals TxD_TC, das von der Sende-/Empfangseinrichtung 12 aus den Zuständen an dem Anschluss TXD von Fig. 7 decodiert wurde. Bei dem Beispiel von Fig. 8 schaltet die Sende-/Empfangseinrichtung 12 ihre Betriebsart B_451, in welcher der Rahmen 450 Bits mit der Bitdauer t_bt1 hat, in dem Bit ADH in die Betriebsart B_452_TX (FAST_TX) um, in welcher der Rahmen 450 Bits mit der Bitdauer t_bt2 hat. Zudem können die Bits des Rahmens 450 in der Betriebsart B_451 mit einem anderen Physical Layer auf den Bus 40 gesendet werden als in der Betriebsart B_452_TX, wie zuvor beschrieben.

Die Sende-/Empfangseinrichtung 12 decodiert also die Zustände an dem Anschluss TXD von Fig. 7 in das Signal TxD_TC gemäß Fig. 8. Für das ADH-Bit ergibt sich für den ersten Teil ADH_0 des ADH-Bits ein logischer Wert 0. Für den zweiten und letzten Teil ADH_1 des ADH-Bits in Fig. 8 ergibt sich ein logischer Wert 1.

Jedes der PWM-Symbole SB_D0, SB_D1 an dem Anschluss TXD kann erst an dem Ende des jeweiligen PWM-Symbols SB_D0, SB_D1 decodiert werden. Somit fügt die Decodierung in der Sende-/Empfangseinrichtung 12 eine zusätzliche Verzögerungszeitdauer T_V2 in das seriell auf den Bus 40 zu sendende Signal TxD_TC ein. Die Verzögerungszeitdauer T_V2 ist gleich der Zeitdauer einer Symbollänge eines der PWM-Symbole SB_D0, SB_D1, wie in Fig. 8 gezeigt. Der Phasenfehler T_P, der durch die PWM Codierung und Decodierung in der sendenden Teilnehmerstation erzeugt wird, ist T_P = T_V1 + T_V2.

Nachdem die Sende-/Empfangseinrichtung 12 die Zustände an dem Anschluss TXD von Fig. 7 in das Signal TxD_TC gemäß Fig. 8 decodiert hat, sendet die Sende-/Empfangseinrichtung 12 das Signal TxD_TC auf den Bus 40 als die Differenzspannung VDIFF. Die auf dem Signal TxD_TC basierende Differenzspannung VDIFF kann von einem Empfangsknoten am Bus 40 empfangen werden. Das zugehörige Signal in dem Empfangsknoten ist hier nicht gezeigt.

Nach der Datenphase 452 endet die Pulsweitenmodulation (PWM) des Sendesignals TxD. Die Umschaltung von der Betriebsart B_452_TX (FAST_TX) oder der Betriebsart B_452_RX (FAST_RX) in die Betriebsart B_451 (SLOW) wird über das Abstellen der PWM-Codierung und somit über das Ausbleiben der vielen Flanken signalisiert.

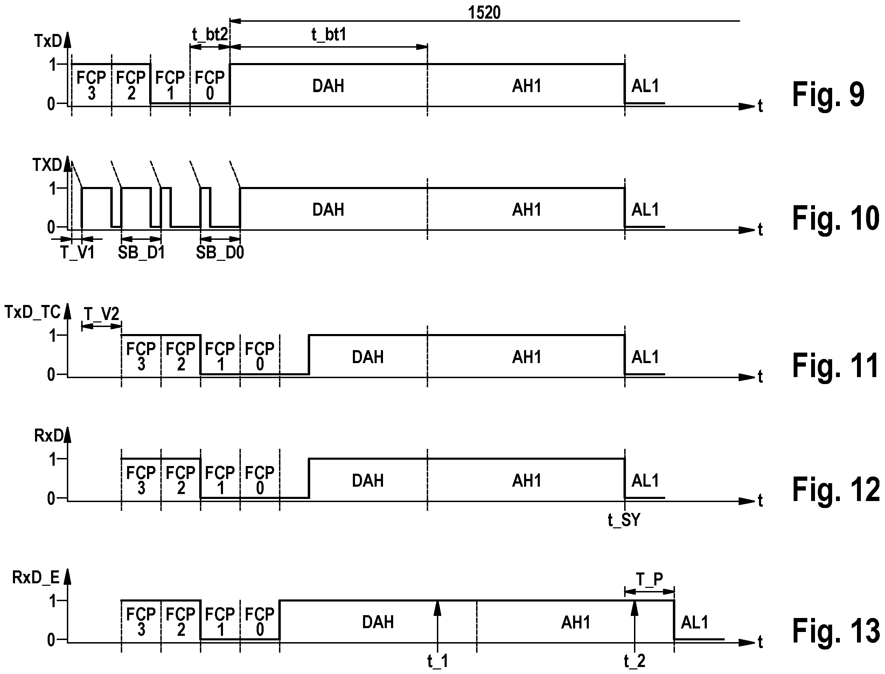

Fig. 9 zeigt über der Zeit t das resultierende digitale Sendesignal TxD in dem Bereich der Umschaltung von der Datenphase 452 des Rahmens 450 in die Arbitrationsphase 451. In den Rahmen 450 ist nach den Bits FCP3, FCP2, FCP1, FCP0 das DAS-Feld 1520 eingefügt. Bis zu dem Bit FCP0 einschließlich, dem letzten Bit der Datenphase 452, haben die Bits des Rahmens 450 noch die Bitdauer t_bt2. Ab dem Bit DAH, dem ersten Bit der nachfolgenden Arbitrationsphase 451, haben die Bits des Rahmens 450 die Bitdauer t_bt1. Wie bereits in Bezug auf Fig. 6 erläutert, ist die Bitdauer t_b2 bei dem hier beschriebenen Beispiel kürzer als die Bitdauer t_bt1.

Wie bereits in Fig. 2 und auch in Fig. 9 gezeigt, werden das DAH-Bit und das darauffolgende AH1-Bit bei dem vorliegenden Ausführungsbeispiel in dem Rahmen 450 mit dem logischen Wert 1 gesendet.

Fig. 10 zeigt die über der Zeit t aus dem Sendesignal TxD resultierenden Zustände, die seriell an dem Anschluss TXD zwischen der Kommunikationssteuereinrichtung 11 und der Sende-/Empfangseinrichtung 12 auftreten. Wie bereits zuvor beschrieben, führt die Kommunikationssteuereinrichtung 11, beispielsweise das Phasenfehler-Kompensationsmodul 15, insbesondere der Signalisierblock 152, in der Datenphase 452 die Pulsweitenmodulation (PWM) des Sendesignals TxD von Fig. 9 durch. Durch die PWM-Codierung und anschließende PWM-Decodierung in der Sende-/Empfangseinrichtung treten die Verzögerungen T_V1, T_V2 auf, wie zuvor beschrieben.

Die Pulsweitenmodulation (PWM) des Sendesignals TxD von Fig. 9 endet mit FCP0-Bit, also vor dem DAH-Bit. In der Arbitrationsphase 451, also nach dem FCP0-Bit, erfolgt gemäß dem Signal TXD von Fig. 10 keine Pulsweitenmodulation (PWM) des Sendesignals TxD.

Am Ende der Datenphase 452 erkennt die Sende-/Empfangseinrichtung 12 an der nun geringeren Frequenz aufgrund der ausbleibenden vielen Flanken des Signals am TXD Anschluss, dass die Sende-/Empfangseinrichtung 12 von der Betriebsart der Datenphase 452 in die Betriebsart B_451 der Arbitrationsphase wechseln soll bzw. auch dort bleiben soll. In der Betriebsart B_451 führt die Sende-/Empfangseinrichtung 12 keine PWM-Decodierung des Signals TxD von Fig. 10 mehr durch. Dadurch entfallen während des DAH-Bits in dem Signal TxD_TC von Fig. 11 die Verzögerungen T_P = T_V1 + T_V2, die durch die PWM-Codierung und PWM-Decodierung des Signals TxD in dem Signal TXD_TC während der Datenphase 452 enthalten waren. Das AH1-Bit in dem Signal TxD_TC von Fig. 11 endet daher um T_P = T_V1 + T_V2 früher, was zu einem Phasenfehler von T_P beim Empfänger führt.

Bei dem Beispiel von Fig. 11 schaltet die Sende-/Empfangseinrichtung 12 ihre Betriebsart B_452_TX (FAST_TX) der Datenphase 452 in die Betriebsart B_451 um, in welcher der Rahmen 450 Bits mit der Bitdauer t_bt1 hat. Zudem kann der Physical Layer umgeschaltet werden, wie zuvor beschrieben.

Wie in Fig. 12 gezeigt, ist die Kommunikationssteuereinrichtung 11 (Protokoll-Controller) in einem Empfangsknoten während der Datenphase 452 auf die vom Sendeknoten empfangenen Flanken des digitalen Signals RxD synchronisiert. Stoppt der Sendeknoten die PWM-Codierung ab dem DAH-Bit, wie zuvor in Bezug auf Fig. 9 bis Fig. 10 beschrieben, wird die Laufzeit vom Sendeknoten zum Empfangsknoten um T_P = T_V1 + T_V2 kürzer. Dieser plötzlich eingeführte Phasenfehler beim Empfänger (Empfangsknoten) entspricht einem Phasensprung. Der Empfangsknoten erwartet das Ende des AH1-Bit jedoch um T_P = T_V1 + T_V2 später, wie mit dem digitalen Signal RxD_E in Fig. 13 gezeigt.

Als Folge des Phasensprungs endet für den Empfangsknoten das AH1-Bit am Empfangsknoten gemäß Fig. 12 um T_P = T_V1 + T_V2 früher als vom Empfangsknoten gemäß dem Signal RxD_E von Fig. 13 erwartet. Zur Kompensation dieses Phasensprungs geht das Phasenfehler-Kompensationsmodul 15 und die Phasenfehler-Kompensationsmodule 25, 35 der Teilnehmerstationen 10, 20, 30 vor, wie nachfolgend beschrieben.

Der Empfangsknoten, genauer gesagt seine Kommunikationssteuereinrichtung 11, tastet das Empfangssignal RxD zu Zeitpunkten t_1, t_2 gemäß der bisherigen Synchronisation in dem Signal RxD_E von Fig. 13 ab. Der Abtastzeitpunkt t_1 ist der Abtastzeitpunkt des DAH-Bits. Der Abtastzeitpunkt t_2 ist der Abtastzeitpunkt des AH1-Bits.

Das Phasenfehler-Kompensationsmodul 15, 25, 35 in der zugehörigen Teilnehmerstation 10, 20, 30 als Empfangsknoten toleriert 1 bis 2 direkt nacheinander abgetastete Bits mit dem logischen Wert 1, beginnend mit der BitPosition von DAH. Das erste Bit, das im Anschluss mit dem logischen Wert 0 abgetastet wird, wird als AL1-Bit akzeptiert.

Bei dem Beispiel von Fig. 12 und Fig. 13 tastet der Empfangsknoten das Signal RxD von Fig. 12 als die Bitsequenz DAH, AL1 ab. Somit fehlt das AH1-Bit. Dennoch toleriert das Phasenfehler-Kompensationsmodul 15, 25, 35 des Empfangsknotens das Fehlen des AH1-Bits.

Ganz allgemein geht das Phasenfehler-Kompensationsmodul 15, 25, 35 des Empfangsknotens davon aus, dass die erste fallende Flanke nach dem DAH-Bit den Beginn des AL1-Bits definiert. Alle Empfangsknoten synchronisieren sich auf die Flanke am Beginn des AL1-Bits, was dem Zeitpunkt t_SY in Fig. 12 entspricht.

Zudem wird beim Abtasten des DAH-Bits als logisch 1 die Hartsynchronisation aktiviert. Somit wird bei der nächsten Flanke eine Hartsynchronisation ausgeführt, also eine Synchronisation, die beliebig große Phasenfehler korrigieren kann. Die Hartsynchronisation wird zu dem Zeitpunkt t_SY ausgeführt, wie in Fig. 12 gezeigt.

Zudem ist das Phasenfehler-Kompensationsmodul 15, 25, 35 des Empfangsknotens derart ausgestaltet, dass ein Abtasten des DAH-Bits als logisch 0 als Formatfehler gewertet wird. In diesem Fall wird ein solcher abgetasteter Rahmen als fehlerhaft bewertet und/oder als ungültig verworfen. Zudem kann ein Fehlerrahmen 47 auf den Bus 40 gesendet werden.

Dadurch ist sichergestellt, dass der Empfangsknoten den durch die LaufzeitVerkürzung bewirkten Phasensprung sowie ein eventuelles Fehlen des AH1-Bits durch eine geeignete Synchronisierung nach der Umschaltung von der Datenphase 452 in die Arbitrationsphase 451 kompensiert.

Gemäß einer Modifikation des zuvor beschriebenen DAS-Felds, kann das DAS-Feld an seinem Ende noch mehr als die beschriebenen vier Bits aufweisen. Jedoch sind die vier Bits in Bezug auf die Maximierung der Nettodatenrate vorteilhaft.

Zusätzlich oder alternativ ist es möglich, dass mindestens eine der Teilnehmerstationen 10, 20, 30 ausgestaltet ist sicherzustellen, dass sich bis zum Abtastpunkt t_1 des DAH-Bits gemäß Fig. 13 ein stabiler rezessiver Pegel auf dem Bus 40 einstellt.

Hierfür ist beispielsweise bei der Sende-/Empfangseinrichtung 12 das zuvor beschriebene Signalverbesserungsmodul 125 ausgestaltet, die SIC-Funktion (SIC = Signal Improvement Capability) nicht nur in der Betriebsart B_451 (SLOW) bei dem Übergang des TxD Signals von 0 nach 1 auszuführen. Diese erste Auslösebedingung für die Ausführung der SIC-Funktion ist zuvor beschrieben. Zusätzlich oder alternativ kann das zuvor beschriebene Signalverbesserungsmodul 125 ausgestaltet sein, eine zweite Auslösebedingung für die Ausführung der SIC-Funktion zu ermöglichen.

Die zweite Auslösebedingung für die Ausführung der SIC-Funktion ist ein Wechsel der Sende-/Empfangseinrichtung 12, 22, 32 des Sendeknotens von der Betriebsart 452_TX (FAST_TX) in die Betriebsart B_451 der Arbitrationsphase 451, wie in Fig. 9 gezeigt. Die von dem Signalverbesserungsmodul 125 in Folge dessen ausgeführte SIC-Funktion bewirkt, dass der Übergang von den Buspegeln der Datenphase 452 zum rezessiven Pegel der Arbitrationsphase 451 beschleunigt wird. Die zweite Auslösebedingung für die Ausführung der SIC-Funktion ist unabhängig davon, auf welche Weise die Kommunikationssteuereinrichtung 11 der Sende-/Empfangseinrichtung den Wechsel der Betriebsart signalisiert.

Damit kann vorteilhaft sichergestellt werden, dass die Empfangsknoten das DAH-Bit als logisch 1 abtasten können.

Ein anderer Vorteil der beschriebenen Ausgestaltung des Signalverbesserungsmoduls 125 liegt darin, dass durch den beschleunigten Übergang von den Pegeln der Datenphase 452 zum rezessiven Pegel der Arbitrationsphase 451 aufgrund der SIC Funktion der Einsatz größerer CAN Topologien möglich wird. Vorteilhaft ermöglicht das Signalverbesserungsmodul 125 dadurch auch, dass beim Auslegen der Topologien der beschriebene Pegelübergang nicht gesondert betrachtet werden muss.

Soll keine Betriebsartumschaltung der Sende-/Empfangseinrichtungen 12, 32 stattfinden, findet auch keine Pulsweitenmodulation (PWM) für eine Codierung der Signalisierung für das Sendesignal TxD von Fig. 6 statt. Somit ist das Signal, das die Sende-/Empfangseinrichtung 12, 32 als Differenzspannung VDIFF auf den Bus 40 treibt, wenn die Sende-/Empfangseinrichtung 12, 32 als Sendeknoten agiert, identisch zu dem Sendesignal TxD von Fig. 6. Da keine PWM-Codierung und daher auch keine Decodierung stattfindet, wird kein einmaliger Phasenfehler T_P zwischen dem Sendesignal TxD_TC in der Sende-/Empfangseinrichtung 12, 32 und dem Sendesignal TxD erzeugt.

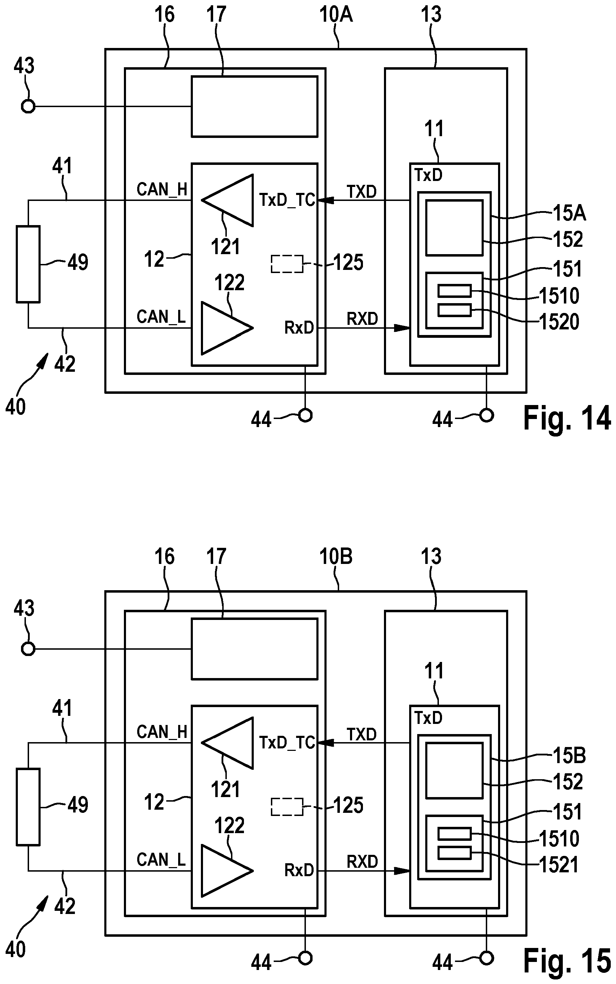

Fig. 14 zeigt eine Teilnehmerstation 10A mit einem Phasenfehler-Kompensationsmodul 15A gemäß einem zweiten Ausführungsbeispiel. Die Teilnehmerstation 10A hat mit Ausnahme des Phasenfehler-Kompensationsmoduls 15A denselben Aufbau wie die Teilnehmerstation 10 gemäß dem vorangehenden Ausführungsbeispiel.

Das Phasenfehler-Kompensationsmodul 15A ist derart ausgestaltet, in dem Fall, bei dem die Teilnehmerstation 10A als Empfangsknoten agiert, einen Wert von DAH = 0 zu tolerieren.

Das heißt, wird in dem Signal RxD von Fig. 12 das DAH-Bit als logisch 0 abgetastet, obwohl das DAH-Bit gemäß Fig. 13 in dem Signal RxD_E eigentlich logisch 1 sein müsste, so toleriert das Phasenfehler-Kompensationsmodul 15A ein solches DAH-Bit.

Jedoch ist das Phasenfehler-Kompensationsmodul 15A derart ausgestaltet, ein Abtasten von weder dem DAH-Bit noch des AH1-Bits als logisch 1 als Formatfehler zu werten. In diesem Fall wird ein solcher abgetasteter Rahmen als fehlerhaft bewertet und/oder als ungültig verworfen. Zudem kann ein Fehlerrahmen 47 auf den Bus 40 gesendet werden.

Zudem wird beim Abtasten des DAH- Bits oder des AH1-Bits als logisch 1 die Hartsynchronisation oder die Synchronisation aktiviert. Somit erfolgt auch hier zum Zeitpunkt t_SY von Fig. 12 eine Synchronisation, die beliebig große Phasenfehler korrigieren kann.

Auch auf diese Weise ist sichergestellt, dass die Teilnehmerstation 10A als Empfangsknoten den durch die Laufzeitverkürzung bewirkten Phasensprung sowie ein eventuelles Fehlen des AH1-Bits nach der Umschaltung von der Datenphase 452 in die Arbitrationsphase 451 durch eine geeignete Synchronisierung kompensiert.

Der Vorteil einer solchen Kompensation des Phasensprungs im zweiten Ausführungsbeispiel liegt darin, dass mehr Zeit für den Übergang auf dem Bus 40 vom Pegel der Datenphase 452 zum rezessiven Pegel der Arbitrationsphase 451 zur Verfügung steht.

Fig. 15 zeigt eine Teilnehmerstation 10B mit einem Phasenfehler-Kompensationsmodul 15B gemäß einem dritten Ausführungsbeispiel. Die Teilnehmerstation 10B hat mit Ausnahme des Phasenfehler-Kompensationsmoduls 15B denselben Aufbau wie die Teilnehmerstation 10 gemäß dem ersten Ausführungsbeispiel.

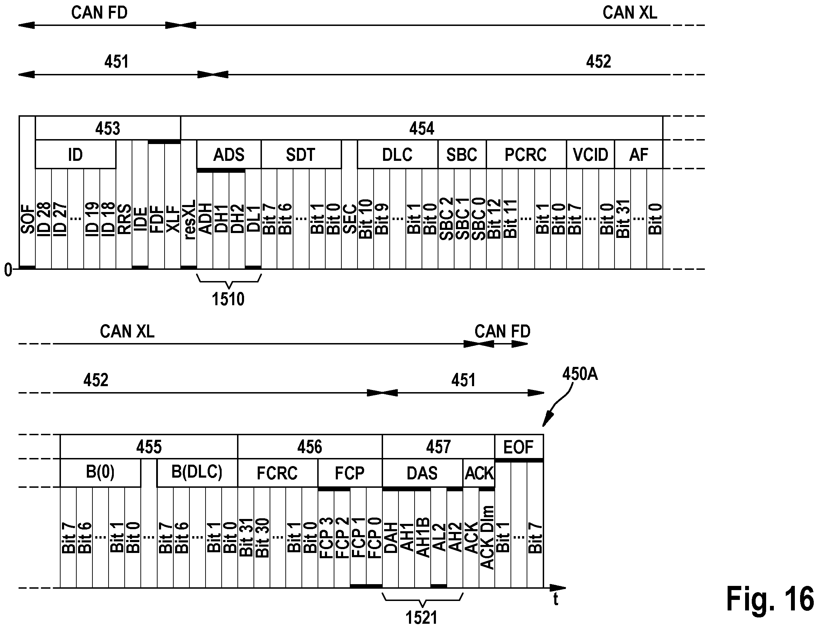

Das Phasenfehler-Kompensationsmodul 15B ist derart ausgestaltet, in dem Fall, bei dem die Teilnehmerstation 10B als Empfangsknoten agiert, das DAH-Bit zu ignorieren. Zudem ist das Phasenfehler-Kompensationsmodul 15A ausgestaltet, in dem Fall, bei dem die Teilnehmerstation 10B als Sendeknoten agiert, ein modifiziertes DAS-Feld 1521 in den Rahmen 450 einzufügen, wie in Fig. 16 gezeigt.

Das modifizierte DAS-Feld 1521 hat die fünf Bits DAH, AH1, AH1B, AL1, AH2. Somit hat das DAS-Feld 1521 im Unterschied zu dem DAS-Feld von Fig. 2 ein zusätzliches Bit im Rahmenformat, nämlich das Bit AH1B.

Außerdem ist das Phasenfehler-Kompensationsmodul 15B ausgestaltet, in dem Fall, bei dem die Teilnehmerstation 10B als Empfangsknoten agiert, 1 bis 2 direkt nach einander abgetastete Bits mit dem logischen Wert 1, beginnend mit der BitPosition von AH1, zu tolerieren. Beim Abtasten des AH1-Bits als logisch 1 aktiviert das Phasenfehler-Kompensationsmodul 15B die Hartsynchronisation. Die Hartsynchronisation wird zu dem Zeitpunkt t_SY ausgeführt, wie in Fig. 12 gezeigt.

Jedoch ist das Phasenfehler-Kompensationsmodul 15B derart ausgestaltet, ein Abtasten des AH1-Bits als logisch 0 als Formatfehler zu werten. In diesem Fall wird ein solcher abgetasteter Rahmen als fehlerhaft bewertet und/oder als ungültig verworfen. Zudem kann ein Fehlerrahmen 47 auf den Bus 40 gesendet werden.

Der Vorteil einer solchen Kompensation des Phasensprungs liegt darin, dass mehr Zeit für den Übergang auf dem Bus 40 vom Pegel der Datenphase 452 zum rezessiven Pegel 402 der Arbitrationsphase 451 zur Verfügung steht. Jedoch produziert das DAS-Feld 1521 aufgrund des zusätzlichen Bits AH1B mehr Überhang (Overhead) von Steuerbits. Dadurch ist die Nettodatenrate im Vergleich zu den vorangehenden Ausführungsbeispielen reduziert.

Alle zuvor beschriebenen Ausgestaltungen der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Selbstverständlich kann das ADS-Feld 1510 mehr als die genannten Bits ADH bis DH2 aufweisen, die in den Ausführungsbeispielen beschrieben wurden. Alternativ oder zusätzlich kann das DAS-Feld 1520 mehr als die genannten Bits DAH bis AH2 aufweisen, die in den Ausführungsbeispielen beschrieben wurden.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

## Patentansprüche

1. Teilnehmerstation (10; 30) für ein serielles Bussystem (1), mit
einer Kommunikationssteuereinrichtung (11; 31) zum Steuern einer Kommunikation der Teilnehmerstation (10; 20; 30) mit mindestens einer anderen Teilnehmerstation (10; 20; 30) des Bussystems (1) und zur Auswertung eines von einem Bus (40) des Bussystems (1) empfangenen Signals (VDIFF), bei dem sich die Bitzeit (t_bt1) in einer ersten Kommunikationsphase (451) unterscheiden kann von einer Bitzeit (t_bt2) in einer zweiten Kommunikationsphase (452),
wobei die Kommunikationssteuereinrichtung (11; 31) ausgestaltet ist, das von dem Bus (40) empfangene Signal (VDIFF), das auf einem von einer anderen Teilnehmerstation (10; 20; 30) erzeugten Sendesignal (TxD_TC) basiert, gemäß einem vorbestimmten Rahmen (450; 450A) abzutasten und auszuwerten, der ein erstes vorbestimmtes Feld (1510), das einen Übergang von der ersten Kommunikationsphase (451) in die zweite Kommunikationsphase (452) anzeigt, und nach der zweiten Kommunikationsphase (452) ein zweites vorbestimmtes Feld (1520; 1521) aufweist, das mit Bits mit der Bitzeit (t_bt1) der ersten Kommunikationsphase (451) einen Übergang von der zweiten Kommunikationsphase (452) in die erste Kommunikationsphase (452) anzeigt,
wobei das zweite vorbestimmte Feld (1520; 1521), zwischen dem Beginn und der darauffolgenden fallenden Flanke des zweiten vorbestimmten Felds (1520; 1521) zwei oder drei Bits mit dem logischen Wert 1 hat,
wobei die Kommunikationssteuereinrichtung (11; 31) ausgestaltet ist, einen Rahmen, den die Kommunikationssteuereinrichtung (11; 31) aus dem von dem Bus (40) empfangenen Signal (VDIFF) abgetastet hat, unabhängig davon als vorbestimmten Rahmen (450; 450A) und daher als gültig in Bezug auf das zweite vorbestimmte Feld (1520; 1521) zu bewerten, ob in dem von dem Bus (40) empfangenen Signal (VDIFF) zwischen dem Beginn des zweiten vorbestimmten Felds (1520; 1521) und der darauffolgenden fallenden Flanke nur ein Bit oder zwei aufeinanderfolgende Bits mit dem logischen Wert 1 abgetastet wurden, und
wobei die Kommunikationssteuereinrichtung (11; 31) ausgestaltet ist, an der fallenden Flanke des zweiten vorbestimmten Felds (1520; 1521) eine Synchronisation auszuführen.

2. Teilnehmerstation (10; 30) nach Anspruch 1,
wobei das zweite vorbestimmte Feld (1520) vier Bits mit der Bitzeit (t_bt1) der ersten Kommunikationsphase (451) hat, und
wobei das zweite vorbestimmte Feld (1520) eine Bitfolge mit dem logischen Wert 1101 hat, und
wobei die Kommunikationssteuereinrichtung (11; 31) ausgestaltet ist, nach dem Abtasten eines Bits mit dem logischen Wert 1 in dem von dem Bus (40) empfangenen Signal (VDIFF) zwischen dem Beginn des zweiten vorbestimmten Felds (1520) und der darauffolgenden fallenden Flanke, das nächste Bit, das in dem von dem Bus (40) empfangenen Signal (VDIFF) mit dem logischen Wert 0 abgetastet wird und für spätestens das dritte Bit der erwarteten Bitfolge 1101 abgetastet wird, als das dritte Bit (AL1) der erwarteten Bitfolge 1101 auszuwerten.

3. Teilnehmerstation (10; 30) nach Anspruch 1 oder 2, wobei die Kommunikationssteuereinrichtung (11; 31) ausgestaltet ist, einen Rahmen, den die Kommunikationssteuereinrichtung (11; 31) aus dem von dem Bus (40) empfangenen Signal (VDIFF) abgetastet hat, als fehlerhaft zu bewerten, wenn das erste Bit (DAH) des zweiten vorbestimmten Felds (1520) nicht als logisch 1 abgetastet wurde.

4. Teilnehmerstation (10; 30) nach einem der vorangehenden Ansprüche, wobei die Kommunikationssteuereinrichtung (11; 31) ausgestaltet ist, eine Hartsynchronisation zu aktivieren, wenn das erste Bit (DAH) des zweiten vorbestimmten Felds (1520) als logisch 1 abgetastet wird.

5. Teilnehmerstation (10; 30) nach Anspruch 2, wobei die Kommunikationssteuereinrichtung (11; 31) ausgestaltet ist, einen Rahmen, den die Kommunikationssteuereinrichtung (11; 31) aus dem von dem Bus (40) empfangenen Signal (VDIFF) abgetastet hat, als fehlerhaft zu bewerten, wenn weder das erste Bit (DAH) noch das zweite Bit (AH1) des zweiten vorbestimmten Felds (1520) als logisch 1 abgetastet wurden.

6. Teilnehmerstation (10; 30) nach Anspruch 5, wobei die Kommunikationssteuereinrichtung (11; 31) ausgestaltet ist, einen Rahmen, den die Kommunikationssteuereinrichtung (11; 31) aus dem von dem Bus (40) empfangenen Signal (VDIFF) abgetastet hat, nicht als fehlerhaft, sondern als gültig in Bezug auf das zweite vorbestimmte Feld (1520) zu bewerten,
wenn das erste Bit (DAH) des zweiten vorbestimmten Felds (1520) als logisch 0 abgetastet wurde und das zweite Bit (AH1) des zweiten vorbestimmten Felds (1520) als logisch 1 abgetastet wurde, oder
wenn das erste Bit (DAH) des zweiten vorbestimmten Felds (1520) als logisch 1 abgetastet wurde und das zweite Bit (AH1) des vorbestimmten Felds (1520) als logisch 0 abgetastet wurde.

7. Teilnehmerstation (10; 30) nach Anspruch 5 oder 6, wobei die Kommunikationssteuereinrichtung (11; 31) ausgestaltet ist, eine Hartsynchronisation oder eine Synchronisation zu aktivieren, wenn das erste Bit (DAH) des vorbestimmten Felds (1520) als logisch 1 abgetastet wird oder wenn das zweite Bit (AH1) des zweiten vorbestimmten Felds (1520) als logisch 1 abgetastet wird.

8. Teilnehmerstation (10; 30) nach Anspruch 1,
wobei das zweite vorbestimmte Feld (1521) fünf Bits mit der Bitzeit (t_bt1) der ersten Kommunikationsphase (451) hat,
wobei das zweite vorbestimmte Feld (1521) eine Bitfolge mit dem logischen Wert **11101** hat, und
wobei die Kommunikationssteuereinrichtung (11; 31) ausgestaltet ist, nach dem Abtasten eines Bits mit dem logischen Wert 1 für das zweite Bit der Bitfolge in dem von dem Bus (40) empfangenen Signal (VDIFF), das nächste Bit, das in dem von dem Bus (40) empfangenen Signal (VDIFF) mit dem logischen Wert 0 abgetastet wird und für spätestens das vierte Bit der erwarteten Bitfolge **11101** abgetastet wird, als das vierte Bit (AL1) der erwarteten Bitfolge **11101** auszuwerten.

9. Teilnehmerstation (10; 30) nach Anspruch 8,
wobei die Kommunikationssteuereinrichtung (11; 31) ausgestaltet ist, in einem Rahmen, den die Kommunikationssteuereinrichtung (11; 31) aus dem von dem Bus (40) empfangenen Signal (VDIFF) abgetastet hat, den abgetasteten Wert des ersten Bit (DAH) des zweiten vorbestimmten Felds (1521) zu ignorieren und für das dritte Bit (AH1) des zweiten vorbestimmten Felds (1521) einen beliebigen Wert als nicht fehlerhaft zu bewerten, und
wobei die Kommunikationssteuereinrichtung (11; 31) ausgestaltet ist, einen Rahmen, den die Kommunikationssteuereinrichtung (11; 31) aus dem von dem Bus (40) empfangenen Signal (VDIFF) abgetastet hat, als fehlerhaft zu bewerten, wenn das zweite Bit (AH1) des zweiten vorbestimmten Felds (1521) als logisch 0 abgetastet wurde.

10. Teilnehmerstation (10; 30) nach Anspruch 8 oder 9, wobei die Kommunikationssteuereinrichtung (11; 31) ausgestaltet ist, eine Hartsynchronisation zu aktivieren, wenn das zweite Bit (AH1) des zweiten vorbestimmten Felds (1521) als logisch 1 abgetastet wird.

11. Teilnehmerstation (10; 30) nach einem der vorangehenden Ansprüche,
zudem mit einer Sende-/Empfangseinrichtung (12; 32) zum Senden eines Sendesignals (TxD) auf den Bus (40) des Bussystems (1) und/oder zum Empfangen eines Signals (VDIFF) von dem Bus (40) des Bussystems (1).

12. Teilnehmerstation (10; 30) nach Anspruch 11,
wobei die Kommunikationssteuereinrichtung (11; 31) ausgestaltet ist, das Sendesignal (TxD) zu erzeugen, und
wobei die Kommunikationssteuereinrichtung (11) ausgestaltet ist, der Sende-/Empfangseinrichtung (12; 32) mittels Pulsweitenmodulation in dem Sendesignal (TxD) zu signalisieren, dass die Sende-/Empfangseinrichtung (12; 32) ihre Betriebsart in eine Betriebsart (B_451) zum Senden in der ersten Kommunikationsphase (451) oder in eine Betriebsart (B_452_TX; B_452_RX) zum Senden in einer zweiten Kommunikationsphase (452) umzuschalten hat.

13. Teilnehmerstation (10; 30) nach Anspruch 11 oder 12,
zudem mit einem Signalverbesserungsmodul (125) zum Beschleunigen eines Übergangs auf dem Bus (40) in der ersten Kommunikationsphase (451) von einem dominanten Buspegel (401) zu einem rezessiven Buspegel (402), der von dem dominanten Buspegel (401) überschreibbar ist,
wobei die Sende-/Empfangseinrichtung (12; 22; 32) ausgestaltet ist, das Signalverbesserungsmodul (125) zusätzlich für eine Beschleunigung des Übergangs von einem der Buspegel der zweiten Kommunikationsphase (452) zu dem rezessiven Pegel der ersten Kommunikationsphase (451) zu aktivieren, wenn die Teilnehmerstation (10; 30) Sender des Sendesignals (TxD) auf den Bus (40) ist und die Sende-/Empfangseinrichtung (12; 22; 32) von einer Betriebsart (452_TX), in welcher die Kommunikationssteuereinrichtung (11; 31) in der zweiten Kommunikationsphase (452) das Sendesignal (TxD) auf den Bus (40) des Bussystems (1) sendet, in eine Betriebsart (B_451) schaltet, in welcher die Kommunikationssteuereinrichtung (11; 31) in der ersten Kommunikationsphase (451) das Sendesignal (TxD) auf den Bus (40) des Bussystems (1) sendet.

14. Teilnehmerstation (10; 30) nach einem der vorangehenden Ansprüche,
wobei der vorbestimmte Rahmen (450) kompatibel zu CAN FD aufgebaut ist, und
wobei in der ersten Kommunikationsphase (451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

15. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Teilnehmerstation (10; 30) nach einem der vorangehenden Ansprüche ist.

16. Verfahren zur Kommunikation in einem seriellen Bussystem (1), wobei das Verfahren mit einer Teilnehmerstation (10; 30) des Bussystems (1) ausgeführt wird, die eine Kommunikationssteuereinrichtung (11; 31) aufweist, wobei das Verfahren die Schritte aufweist,
Steuern, mit der Kommunikationssteuereinrichtung (11; 31), einer Kommunikation der Teilnehmerstation (10; 20; 30) mit mindestens einer anderen Teilnehmerstation (10; 20; 30) des Bussystems (1) und Auswerten eines von einem Bus (40) des Bussystems (1) empfangenen Signals (VDIFF), bei dem sich die Bitzeit (t_bt1) in einer ersten Kommunikationsphase (451) unterscheiden kann von einer Bitzeit (t_bt2) in einer zweiten Kommunikationsphase (452),
wobei die Kommunikationssteuereinrichtung (11; 31) das von dem Bus (40) empfangene Signal (VDIFF), das auf einem von einer anderen Teilnehmerstation (10; 20; 30) erzeugten Sendesignal (TxD_TC) basiert, gemäß einem vorbestimmten Rahmen (450; 450A) abtastet und auswertet, der ein erstes vorbestimmtes Feld (1510), das einen Übergang von der ersten Kommunikationsphase (451) in die zweite Kommunikationsphase (452) anzeigt, und nach der zweiten Kommunikationsphase (452) ein zweites vorbestimmtes Feld (1520; 1521) aufweist, das mit Bits mit der Bitzeit (t_bt1) der ersten Kommunikationsphase (451) einen Übergang von der zweiten Kommunikationsphase (452) in die erste Kommunikationsphase (452) anzeigt,wobei das zweite vorbestimmte Feld (DAS) zwischen dem Beginn und der darauffolgenden fallenden Flanke des zweiten vorbestimmten Felds (1520; 1521) zwei oder drei Bits mit dem logischen Wert 1 hat,
wobei die Kommunikationssteuereinrichtung (11; 31) einen Rahmen, den die Kommunikationssteuereinrichtung (11; 31) aus dem von dem Bus (40) empfangenen Signal (VDIFF) abgetastet hat, unabhängig davon als vorbestimmten Rahmen (450; 450A) und daher als gültig in Bezug auf das zweite vorbestimmte Feld (1520; 1521) bewertet, ob in dem von dem Bus (40) empfangenen Signal (VDIFF) zwischen dem Beginn des zweiten vorbestimmten Felds (1520; 1521) und der darauffolgenden fallenden Flanke nur ein Bit oder zwei aufeinanderfolgende Bits mit dem logischen Wert 1 abgetastet wurden, und
wobei die Kommunikationssteuereinrichtung (11; 31) an der fallenden Flanke des zweiten vorbestimmten Felds (1520; 1521)) eine Synchronisation ausführt.

## Claims

1. Subscriber station (10; 30) for a serial bus system (1), having
a communication control device (11; 31) for controlling a communication between the subscriber station (10; 20; 30) and at least one other subscriber station (10; 20; 30) of the bus system (1) and for evaluating a signal (VDIFF), received from a bus (40) of the bus system (1), for which the bit time (t_bt1) in a first communication phase (451) can differ from a bit time (t_bt2) in a second communication phase (452),
wherein the communication control device (11; 31) is configured to sample and evaluate the signal (VDIFF) received from the bus (40), which is based on a transmission signal (TxD_TC) generated by another subscriber station (10; 20; 30), according to a predetermined frame (450; 450A) that has a first predetermined field (1510), which indicates a transition from the first communication phase (451) to the second communication phase (452), and, after the second communication phase (452), a second predetermined field (1520; 1521), which uses bits having the bit time (t_bt1) of the first communication phase (451) to indicate a transition from the second communication phase (452) to the first communication phase (452),
wherein the second predetermined field (1520; 1521), between the start and the subsequent falling edge of the second predetermined field (1520; 1521), has two or three bits having the logic value 1,
wherein the communication control device (11; 31) is configured to rate a frame that the communication control device (11; 31) has sampled from the signal (VDIFF) received from the bus (40) as a predetermined frame (450; 450A), and therefore as valid with respect to the second predetermined field (1520; 1521), irrespective of whether only one bit or two consecutive bits having the logic value 1 were sampled in the signal (VDIFF) received from the bus (40) between the start of the second predetermined field (1520; 1521) and the subsequent falling edge, and
wherein the communication control device (11; 31) is configured to perform a synchronization at the falling edge of the second predetermined field (1520; 1521).

2. Subscriber station (10; 30) according to Claim 1,
wherein the second predetermined field (1520) has four bits having the bit time (t_bt1) of the first communication phase (451), and
wherein the second predetermined field (1520) has a bit sequence having the logic value 1101, and
wherein the communication control device (11; 31) is configured so as, after a bit having the logic value 1 has been sampled in the signal (VDIFF) received from the bus (40) between the start of the second predetermined field (1520) and the subsequent falling edge, to evaluate the next bit that is sampled with the logic value 0 in the signal (VDIFF) received from the bus (40) and is sampled for the third bit of the expected bit sequence 1101 at the latest as the third bit (AL1) of the expected bit sequence 1101.

3. Subscriber station (10; 30) according to Claim 1 or 2, wherein the communication control device (11; 31) is configured to rate a frame that the communication control device (11; 31) has sampled from the signal (VDIFF) received from the bus (40) as erroneous if the first bit (DAH) of the second predetermined field (1520) was not sampled as logic 1.

4. Subscriber station (10; 30) according to one of the preceding claims, wherein the communication control device (11; 31) is configured to activate a hard synchronization if the first bit (DAH) of the second predetermined field (1520) is sampled as logic 1.

5. Subscriber station (10; 30) according to Claim 2, wherein the communication control device (11; 31) is configured to rate a frame that the communication control device (11; 31) has sampled from the signal (VDIFF) received from the bus (40) as erroneous if neither the first bit (DAH) nor the second bit (AH1) of the second predetermined field (1520) were sampled as logic 1.

6. Subscriber station (10; 30) according to Claim 5, wherein the communication control device (11; 31) is configured to rate a frame that the communication control device (11; 31) has sampled from the signal (VDIFF) received from the bus (40) not as erroneous but rather as valid with respect to the second predetermined field (1520)
if the first bit (DAH) of the second predetermined field (1520) was sampled as logic 0 and the second bit (AH1) of the second predetermined field (1520) was sampled as logic 1, or
if the first bit (DAH) of the second predetermined field (1520) was sampled as logic 1 and the second bit (AH1) of the predetermined field (1520) was sampled as logic 0.

7. Subscriber station (10; 30) according to Claim 5 or 6, wherein the communication control device (11; 31) is configured to activate a hard synchronization or a synchronization if the first bit (DAH) of the predetermined field (1520) is sampled as logic 1 or if the second bit (AH1) of the second predetermined field (1520) is sampled as logic 1.

8. Subscriber station (10; 30) according to Claim 1,
wherein the second predetermined field (1521) has five bits having the bit time (t_bt1) of the first communication phase (451),
wherein the second predetermined field (1521) has a bit sequence having the logic value 11101, and
wherein the communication control device (11; 31) is configured so as, after a bit having the logic value 1 has been sampled for the second bit of the bit sequence in the signal (VDIFF) received from the bus (40), to evaluate the next bit that is sampled with the logic value 0 in the signal (VDIFF) received from the bus (40) and is sampled for the fourth bit of the expected bit sequence 11101 at the latest as the fourth bit (AL1) of the expected bit sequence 11101.

9. Subscriber station (10; 30) according to Claim 8,
wherein the communication control device (11; 31) is configured to ignore the sampled value of the first bit (DAH) of the second predetermined field (1521) in a frame that the communication control device (11; 31) has sampled from the signal (VDIFF) received from the bus (40) and to rate any value for the third bit (AH1) of the second predetermined field (1521) as not erroneous, and
wherein the communication control device (11; 31) is configured to rate a frame that the communication control device (11; 31) has sampled from the signal (VDIFF) received from the bus (40) as erroneous if the second bit (AH1) of the second predetermined field (1521) was sampled as logic 0.

10. Subscriber station (10; 30) according to Claim 8 or 9, wherein the communication control device (11; 31) is configured to activate a hard synchronization if the second bit (AH1) of the second predetermined field (1521) is sampled as logic 1.

11. Subscriber station (10; 30) according to one of the preceding claims,
moreover having a transmitting/receiving device (12; 32) for transmitting a transmission signal (TxD) to the bus (40) of the bus system (1) and/or for receiving a signal (VDIFF) from the bus (40) of the bus system (1).

12. Subscriber station (10; 30) according to Claim 11,
wherein the communication control device (11; 31) is configured to generate the transmission signal (TxD), and
wherein the communication control device (11) is configured to signal to the transmitting/receiving device (12; 32) by means of pulse width modulation in the transmission signal (TxD) that the transmitting/receiving device (12; 32) needs to change over its operating mode to an operating mode (B_451) for transmitting in the first communication phase (451) or to an operating mode (B_452_TX; B_452_RX) for transmitting in a second communication phase (452).

13. Subscriber station (10; 30) according to Claim 11 or 12,
moreover having a signal enhancement module (125) for accelerating a transition on the bus (40) in the first communication phase (451) from a dominant bus level (401) to a recessive bus level (402), which is able to be overwritten by the dominant bus level (401),
wherein the transmitting/receiving device (12; 22; 32) is configured to activate the signal enhancement module (125) additionally for accelerating the transition from one of the bus levels of the second communication phase (452) to the recessive level of the first communication phase (451) if the subscriber station (10; 30) is a transmitter of the transmission signal (TxD) to the bus (40) and the transmitting/receiving device (12; 22; 32) switches from an operating mode (452_TX) in which the communication control device (11; 31) transmits the transmission signal (TxD) to the bus (40) of the bus system (1) in the second communication phase (452) to an operating mode (B_451) in which the communication control device (11; 31) transmits the transmission signal (TxD) to the bus (40) of the bus system (1) in the first communication phase (451).

14. Subscriber station (10; 30) according to one of the preceding claims,
wherein the predetermined frame (450) is of compatible design with CAN FD,
and
wherein negotiation takes place in the first communication phase (451) in order to determine which of the subscriber stations (10, 20, 30) of the bus system (1) receives at least temporarily exclusive, collision-free access to the bus (40) in the subsequent, second communication phase (452).

15. Bus system (1), having
a bus (40), and
at least two subscriber stations (10; 20; 30) which are connected to one another via the bus (40) in such a way that they can communicate serially with one another and at least one subscriber station (10; 30) of which is a subscriber station (10; 30) according to one of the preceding claims.

16. Method for communicating in a serial bus system (1), wherein the method is carried out using a subscriber station (10; 30) of the bus system (1), which subscriber station has a communication control device (11; 31), wherein the method has the steps of
controlling, with the communication control device (11; 31), a communication between the subscriber station (10; 20; 30) and at least one other subscriber station (10; 20; 30) of the bus system (1) and evaluating a signal (VDIFF), received from a bus (40) of the bus system (1), for which the bit time (t_bt1) in a first communication phase (451) can differ from a bit time (t_bt2) in a second communication phase (452),
wherein the communication control device (11; 31) samples and evaluates the signal (VDIFF) received from the bus (40), which is based on a transmission signal (TxD_TC) generated by another subscriber station (10; 20; 30), according to a predetermined frame (450; 450A) that has a first predetermined field (1510), which indicates a transition from the first communication phase (451) to the second communication phase (452), and, after the second communication phase (452), a second predetermined field (1520; 1521), which uses bits having the bit time (t_bt1) of the first communication phase (451) to indicate a transition from the second communication phase (452) to the first communication phase (452), wherein the second predetermined field (DAS), between the start and the subsequent falling edge of the second predetermined field (1520; 1521), has two or three bits having the logic value 1,
wherein the communication control device (11; 31) rates a frame that the communication control device (11; 31) has sampled from the signal (VDIFF) received from the bus (40) as a predetermined frame (450; 450A), and therefore as valid with respect to the second predetermined field (1520; 1521), irrespective of whether only one bit or two consecutive bits having the logic value 1 were sampled in the signal (VDIFF) received from the bus (40) between the start of the second predetermined field (1520; 1521) and the subsequent falling edge, and
wherein the communication control device (11; 31) performs a synchronization at the falling edge of the second predetermined field (1520; 1521).

## Revendications

1. Station d'abonné (10 ; 30) pour un système de bus série (1), comprenant
un dispositif (11 ; 31) de commande de communication destiné à commander une communication de la station d'abonné (10 ; 20 ; 30) avec au moins une autre station d'abonné (10 ; 20 ; 30) du système de bus (1) et pour évaluer un signal (VDIFF) reçu d'un bus (40) du système de bus (1), le temps de bit (t_bt1) dans une première phase de communication (451) pouvant différer d'un temps de bit (t_bt2) dans une deuxième phase de communication (452),
le dispositif (11 ; 31) de commande de communication étant conçu pour analyser et évaluer, selon une trame prédéterminée (450 ; 450A), le signal (VDIFF) reçu par le bus (40) et basé sur un signal d'émission (TxD_TC) généré par une autre station d'abonné (10 ; 20 ; 30), qui comprend un premier champ prédéterminé (1510) indiquant une transition de la première phase de communication (451) à la deuxième phase de communication (452), et, après la deuxième phase de communication (452), un deuxième champ prédéterminé (1520 ; 1521) qui, avec des bits ayant le temps de bit (t_bt1) de la première phase de communication (451), indique une transition de la deuxième phase de communication (452) à la première phase de communication (452),
le deuxième champ prédéterminé (1520 ; 1521) comprenant deux ou trois bits ayant la valeur logique 1 entre le début et le front descendant suivant du deuxième champ prédéterminé (1520 ; 1521),
le dispositif (11 ; 31) de commande de communication étant conçu pour évaluer une trame que le dispositif (11 ; 31) de commande de communication a analysé dans le signal (VDIFF) reçu du bus (40), indépendamment de celui-ci, comme étant une trame prédéterminée (450 ; 450A) et donc comme étant valide par rapport au deuxième champ prédéterminé (1520 ; 1521), si, dans le signal (VDIFF) reçu par le bus (40), entre le début du deuxième champ prédéterminé (1520 ; 1521) et le front descendant suivant, un seul bit ou deux bits consécutifs ayant la valeur logique 1 ont été analysés, et
le dispositif (11 ; 31) de commande de communication étant conçu pour effectuer une synchronisation sur le front descendant du deuxième champ prédéterminé (1520 ; 1521).

2. Station d'abonné (10 ; 30) selon la revendication 1,
le deuxième champ prédéterminé (1520) ayant quatre bits avec le temps de bit (t_bt1) de la première phase de communication (451), et
le deuxième champ prédéterminé (1520) ayant une séquence de bits avec la valeur logique 1101, et
le dispositif (11 ; 31) de commande de communication étant conçu pour, après avoir détecté un bit ayant la valeur logique 1 dans le signal (VDIFF) reçu du bus (40), entre le début du deuxième champ prédéterminé (1520) et le front descendant suivant, analyser le bit suivant, qui est analysé avec la valeur logique 0 dans le signal (VDIFF) reçu par le bus (40) et qui est analysé au plus tard pour le troisième bit de la séquence de bits 1101 attendue, doit être évalué comme étant le troisième bit (AL1) de la séquence de bits 1101 attendue.

3. Station d'abonné (10 ; 30) selon la revendication 1 ou la revendication 2, dans laquelle le dispositif (11 ; 31) de commande de communication est conçu pour évaluer comme étant erronée une trame que le dispositif (11 ; 31) de commande de communication a analysée dans le signal (VDIFF) reçu du bus (40) si le premier bit (DAH) du deuxième champ prédéterminé (1520) n'a pas été analysé comme un 1 logique.

4. Station d'abonné (10 ; 30) selon l'une des revendications précédentes, dans laquelle le dispositif (11 ; 31) de commande de communication est conçu pour activer une synchronisation dure lorsque le premier bit (DAH) du deuxième champ prédéterminé (1520) est analysé comme étant un 1 logique.

5. Station d'abonné (10 ; 30) selon la revendication 2, dans laquelle le dispositif (11 ; 31) de commande de communication est conçu pour évaluer comme étant erronée une trame que le dispositif (11 ; 31) de commande de communication a analysée dans le signal (VDIFF) reçu du bus (40) si ni le premier bit (DAH) ni le deuxième bit (AH1) du deuxième champ prédéterminé (1520) n'ont été analysés comme étant des 1 logiques.

6. Station d'abonné (10 ; 30) selon la revendication 5, dans laquelle le dispositif (11 ; 31) de commande de communication est conçu pour ne pas évaluer comme étant erronée une trame que le dispositif (11 ; 31) de commande de communication a analysée dans le signal (VDIFF) reçu du bus (40), mais comme étant valide par rapport au deuxième champ prédéterminé (1520),
si le premier bit (DAH) du deuxième champ prédéterminé (1520) a été analysé comme étant un 0 logique et le deuxième bit (AH1) du deuxième champ prédéterminé (1520) a été analysé comme étant un 1 logique, ou
si le premier bit (DAH) du deuxième champ prédéterminé (1520) a été analysé comme étant un 1 logique et le deuxième bit (AH1) du champ prédéterminé (1520) a été analysé comme étant un 0 logique.

7. Station d'abonné (10 ; 30) selon la revendication 5 ou la revendication 6, dans laquelle le dispositif (11 ; 31) de commande de communication est conçu pour activer une synchronisation dure ou une synchronisation lorsque le premier bit (DAH) du champ prédéterminé (1520) est analysé comme étant un 1 logique ou lorsque le deuxième bit (AH1) du deuxième champ prédéterminé (1520) est analysé comme étant un 1 logique.

8. Station d'abonné (10 ; 30) selon la revendication 1,
le deuxième champ prédéterminé (1521) ayant cinq bits avec le temps de bit (t_bt1) de la première phase de communication (451),
le deuxième champ prédéterminé (1521) ayant une séquence de bits avec la valeur logique 11101, et
le dispositif (11 ; 31) de commande de communication étant conçu pour, après avoir analysé un bit ayant la valeur logique 1 pour le deuxième bit de la séquence de bits dans le signal (VDIFF) reçu du bus (40), évaluer le bit suivant, qui est analysé dans le signal (VDIFF) reçu par le bus (40) comme ayant la valeur logique 0 et qui est analysé au plus tard pour le quatrième bit de la séquence de bits 11101 attendue comme étant le quatrième bit (AL1) de la séquence de bits 11101 attendue.

9. Station d'abonné (10 ; 30) selon la revendication 8,
dans laquelle le dispositif (11 ; 31) de commande de communication est conçu pour ignorer, dans une trame que le dispositif (11 ; 31) de commande de communication a analysée dans le signal (VDIFF) reçu du bus (40), la valeur analysée du premier bit (DAH) du deuxième champ prédéterminé (1521) et pour évaluer une valeur quelconque comme n'étant pas erronée pour le troisième bit (AH1) du deuxième champ prédéterminé (1521), et
le dispositif (11 ; 31) de commande de communication étant conçu pour évaluer comme étant erronée une trame que le dispositif (11 ; 31) de commande de communication a analysé dans le signal (VDIFF) reçu du bus (40), si le deuxième bit (AH1) du deuxième champ prédéterminé (1521) a été analysé comme étant un 0 logique.

10. Station d'abonné (10 ; 30) selon la revendication 8 ou la revendication 9, dans laquelle le dispositif (11 ; 31) de commande de communication est conçu pour activer une synchronisation dure lorsque le deuxième bit (AH1) du deuxième champ prédéterminé (1521) est analysé comme étant un 1 logique.

11. Station d'abonné (10 ; 30) selon l'une des revendications précédentes,
comprenant en outre un dispositif d'émission/réception (12 ; 32) pour émettre un signal d'émission (TxD) sur le bus (40) du système de bus (1) et/ou pour recevoir un signal (VDIFF) du bus (40) du système de bus (1).

12. Station d'abonné (10 ; 30) selon la revendication 11,
dans laquelle le dispositif (11 ; 31) de commande de communication est conçu pour générer le signal d'émission (TxD), et
dans laquelle le dispositif de commande de communication (11) est conçu pour signaler au dispositif d'émission/réception (12 ; 32), au moyen d'une modulation de largeur d'impulsion dans le signal d'émission (TxD), que le dispositif d'émission/réception (12 ; 32) doit commuter son mode de fonctionnement sur un mode (B_451) pour émettre dans la première phase de communication (451) ou sur un mode (B_452_TX ; B_452_RX) pour émettre dans une deuxième phase de communication (452).

13. Station d'abonné (10 ; 30) selon la revendication 11 ou la revendication 12,
comprenant en outre un module (125) d'amélioration de signal pour accélérer une transition sur le bus (40) dans la première phase de communication (451) d'un niveau de bus dominant (401) à un niveau de bus récessif (402) qui est apte à être écrasé par le niveau de bus dominant (401),
le dispositif émetteur/récepteur (12 ; 22 ; 32) étant conçu pour activer en plus le module (125) d'amplification de signal afin d'accélérer la transition d'un des niveaux de bus de la deuxième phase de communication (452) vers le niveau récessif de la première phase de communication (451) lorsque la station d'abonné (10 ; 30) est l'émettrice du signal d'émission (TxD) sur le bus (40) et que le dispositif d'émission/réception (12 ; 22 ; 32) passe d'un mode de fonctionnement (452_TX), dans lequel le dispositif (11 ; 31) de commande de communication émet le signal d'émission (TxD) sur le bus (40) du système de bus (1) dans la deuxième phase de communication (452), à un mode de fonctionnement (B_451) dans lequel le dispositif (11 ; 31) de commande de communication émet le signal d'émission (TxD) sur le bus (40) du système de bus (1) dans la première phase de communication (451).

14. Station d'abonné (10 ; 30) selon l'une des revendications précédentes,
la trame prédéterminée (450) étant structurée de manière compatible avec CAN FD, et
la première phase de communication (451) servant à déterminer laquelle des stations d'abonnés (10, 20, 30) du système de bus (1) obtiendra, lors de la deuxième phase de communication (452) qui suit, un accès au bus (40) qui lui sera réservé, au moins temporairement, et sans risque de collision.

15. Système de bus (1), comprenant
un bus (40), et
au moins deux stations d'abonnés (10 ; 20 ; 30), qui sont reliées entre elles par le bus (40) de telle sorte qu'elles soient aptes à communiquer entre elles en série et dont au moins une station d'abonné (10 ; 30) est une station d'abonné (10 ; 30) selon l'une des revendications précédentes.

16. Procédé de communication dans un système de bus série (1), le procédé étant exécuté avec une station d'abonné (10 ; 30) du système de bus (1) qui comprend un dispositif (11 ; 31) de commande de communication, le procédé comprenant les étapes suivantes :
commander, au moyen du dispositif (11 ; 31) de commande de communication, une communication de la station d'abonné (10 ; 20 ; 30) avec au moins une autre station d'abonné (10 ; 20 ; 30) du système de bus (1) et évaluer un signal (VDIFF) reçu d'un bus (40) du système de bus (1), le temps de bit (t_bt1) dans une première phase de communication (451) pouvant différer d'un temps de bit (t_bt2) dans une deuxième phase de communication (452),
le dispositif (11 ; 31) de commande de communication analyse et évalue, selon une trame prédéterminée (450 ; 450A), le signal (VDIFF) reçu par le bus (40), qui est basé sur un signal d'émission (TxD_TC) généré par une autre station d'abonné (10 ; 20 ; 30), qui comprend un premier champ prédéterminé (1510) indiquant une transition de la première phase de communication (451) à la deuxième phase de communication (452), et après la deuxième phase de communication (452), un deuxième champ prédéterminé (1520 ; 1521) qui, avec des bits ayant le temps de bit (t_bt1) de la première phase de communication (451), indique une transition de la deuxième phase de communication (452) à la première phase de communication (452), le deuxième champ prédéterminé (DAS) entre le début et le front descendant suivant du deuxième champ prédéterminé (1520 ; 1521) ayant deux ou trois bits avec la valeur logique 1,
le dispositif (11 ; 31) de commande de communication évaluant une trame que le dispositif (11 ; 31) de commande de communication a analysé dans le signal (VDIFF) reçu du bus (40), indépendamment de celui-ci, comme étant une trame prédéterminée (450 ; 450A) et donc comme étant valide par rapport au deuxième champ prédéterminé (1520 ; 1521), si, dans le signal (VDIFF) reçu par le bus (40), entre le début du deuxième champ prédéterminé (1520 ; 1521) et le front descendant suivant, un seul bit ou deux bits consécutifs ont été détectés avec la valeur logique 1, et
le dispositif (11 ; 31) de commande de communication effectuant une synchronisation sur le front descendant du deuxième champ prédéterminé (1520 ; 1521).
